# EUROPÄISCHE PATENTANMELDUNG

(11) **EP 2 311 907 A1**
(43) Veröffentlichungstag der Anmeldung: **20.04.2011**
(21) Anmeldenummer: 09173441.8
(22) Anmeldetag: 19.10.2009
(51) Int. Cl.: C08K 3/00, C08K 5/521, C08K 5/548, C08L 21/00

(54) **Neue Kautschukmischungen**

(71) Anmelder: LANXESS Deutschland GmbH, 51369 Leverkusen (DE)
(72) Erfinder: Obrecht, Werner, 47447 Moers (DE); Früh, Thomas, 67112 Mutterstadt (DE)

(57) **Zusammenfassung**

Bereitgestellt werden neue vulkanisierbare Kautschukmischungen, die eine spezielle Kombination von hellem Füllstoff, Vulkanisationsbeschleuniger und weiteren Additiven enthalten, sich durch eine verbesserte Verarbeitungssicherheit auszeichnen und den Einsatz schädlicher Vulkanisationsbeschleuniger nicht mehr erfordern. Gegenstand der Erfindung ist ferner das Verfahren zur Herstellung dieser Kautschukmischungen, ihre Vulkanisation sowie die dabei erhaltenen Vulkanisate.

## Beschreibung

Die Erfindung betrifft neue Kautschukmischungen, die eine spezielle Kombination von hellem Füllstoff, Vulkanisationsbeschleuniger und weiteren Additiven enthalten, deren Herstellung sowie ein Verfahren zur Vulkanisation dieser Kautschukmischungen und die dabei hergestellten Vulkanisate.

In der Kautschukindustrie werden Guanidine wie Tetramethylguanidin, Tetraethylguanidin, Diphenylguanidin ("DPG"), Di-o-tolylguanidin ("DOTG") und o-Tolylbiguanidin für die Schwefelvulkanisation von Gummimischungen eingesetzt. Insbesondere Kombinationen der Guanidine mit üblichen Beschleunigern für die Schwefelvulkanisation wie z.B. Mercaptobeschleunigern, Sulfenamiden, Thiuramen und Dithocarbamaten sind bekannt.

Seit der Einführung des sogenannten "grünen Reifens" kommen Guanidine auch in silicahaltigen Kautschukmischungen zum Einsatz, die für Reifenlaufflächen mit niedrigem Rollwiderstand verwendet werden. Beschrieben wird dies beispielsweise in DE-OS 2447614 (Degussa), US-A-4,709,065 (Shin Etsu), EP-A-0 299 074 (Bridgestone), DE-A-38 136 78 (Bridgestone), EP-A-0 501 227 (Michelin) sowie EP-A-0 447 066 (Bridgestone). Neben einem beschleunigenden Effekt auf die Vulkanisation wirken die Guanidine in derartigen silicahaltigen Kautschukmischungen auch als Katalysatoren für die Silanisierung der Kieselsäure.

Die zuvor genannten Guanidine kommen jedoch wegen ihrer Toxizität zunehmend in Verruf. So werden sie beispielsweise als allergieauslösend eingeschätzt (GUV-Informationen GUV-1 8559 (bisher GUV 50.0.11): "Theorie und Praxis der Prävention: Hautkrankheiten und Hautschutz"; Gesetzliche Unfallversicherung; Berufsgenossenschaft für Gesundheitsdienst und Wohlfahrtspflege) und sollen ersetzt werden. Weiterhin können Guanidine primäre aromatische Amine freisetzen und weisen im Falle des DOTG eine problematische Eigentoxizität auf.

Aus EP-A-0 943 657 ist eine vulkanisierbare Zusammensetzung auf Basis eines carboxylgruppenhaltigen Acrylat-Elastomers, insbesondere eines Copolymers aus einem aliphatischen ungesättigten Dicarbonsäuremonoalkylester und einem Acrylat bekannt. Diese Zusammensetzung enthält ein Mercaptobenzimidazol sowie als Vulkanisationssystem eine Kombination aus einem Diamin als Vernetzer und einem Vulkanisationsbeschleuniger. Bei letzterem kann es sich um ein Guanidin handeln oder aber anstelle des Guanidins um 1,8-Diazabicyclo[5.4.0]undec-7-en (DBU), 1,5-Diazabicyclo[4.3.0]non-5-en (DBN) oder deren Salze.

In EP-A-0 832 920 wird die Verwendung von Zinkdithiophosphaten in Kautschukmischungen beschrieben. Als Kautschuke können z.B. NR (natural rubber) sowie synthetische Kautschuke wie SBR (Styrol-Butadien Kautschuke), Polyisopren, BR (Polybutadienkautschuk), IR (Butylkautschuk), halogenierter Butylkautschuk sowie Ethyl-Propylen Kautschuk eingesetzt werden. Diese Kautschukmischungen werden für die Laufflächen pneumatischer Reifen mit guter Steuerbarkeit bei hohen Geschwindigkeiten eingesetzt. In den Beispielen von EP-A-0 832 920 liegt der Fokus auf SBR- bzw. NR-basierten Mischungen, in denen ausschließlich Russ als Füllstoff zum Einsatz gelangt und DPG als Vulkanisationsbeschleuniger in Mengen zwischen 0,2 und 0,5 phr zugesetzt wird.

Als Füllstoffe zur Verbesserung der mechanischen Eigenschaften werden bekanntermaßen häufig Ruße und Kieselsäuren eingesetzt, Anwendung finden inzwischen aber auch Mikrogele. Häufig zeigen Mikrogele jedoch keine ausreichende Verstärkungswirkung (Modul), und es müssen daher extrem hohe Mengen eingesetzt werden, um zu technisch akzeptablen Eigenschaftswerten zu gelangen. In **EP-A-1 203 786** werden Kautschukmischungen aus mindestens einem doppelbindungshaltigen Kautschuk (A) und mindestens einem Kautschukgel (B) beschrieben, die mindestens ein Phosphorylpolysulfid (C) enthalten. Festgestellt wird, dass durch den Zusatz dieser Phosphorylpolysulfide eine Verbesserung der Verstärkungswirkung gelgefüllter Vulkanisate eintritt. Als Phosphorylpolysulfid (C) werden beispielsweise Zink-bis(O,O-2-Ethylhexyl)dithiophosphat und/oder Bis(O,O-2-Ethylhexylthiophosphoryl)polysulfid eingesetzt. Als Kautschukgele (B) in Form vernetzter Kautschukpartikel können unmodifizierte oder aber durch geeignete funktionelle Gruppen modifizierte Mikrogele eingesetzt werden. Den Mischungen können ferner diverse weitere in der Kautschukindustrie übliche Additive zugesetzt werden, so auch Füllstoffaktivatoren wie Triethanolamin, Polyethylenglykol, Hexantriol oder Bis(triethoxysilylpropyl)-Tetrasulfid, und jegliche Form weiterer Füllstoffe. In der entsprechenden Aufzählung von Füllstoffen werden unter anderem Russ und Kieselsäuren genannt. Der Fokus der EP 1 203 786 liegt in den Beispielen auf Mischungen auf der Basis von Naturkautschuk, denen als Füllstoffe nicht-carboxylierte SBR Kautschukgele sowie Russ zugesetzt werden, jedoch keine Kupplungsagentien, z.B. in Form von Silanen.

In EP-A-1 600 472 wird ein Verfahren zur Herstellung von Kautschukmischungen beschrieben, die einen Dienkautschuk, einen hellen Füllstoff, insbesondere Kieselsäure, und ein polysulfidisches Alkoxysilan enthalten. Das Verfahren wird in mindestens zwei Stufen durchgeführt, wobei in der 1. Stufe, der Dienkautschuk, Kieselsäure, polysulfidisches Alkoxysilan und das Dithiophosphat gemischt werden und wobei der erste Mischschritt bei einer Temperatur von mindestens 130°C durchgeführt wird. Problematisch an diesen Mischungen ist, dass sie aufgrund sehr kurzer t₁₀-Zeiten, die gemäß den Beispielen bei ungefähr 2,2 bis 2,3 Minuten liegen, keine ausreichende Verarbeitungssicherheit bieten. Aufgabe der DE 69 903 563 T2 war es, Kautschukmischungen für Laufreifenanwendungen bereit zustellen, die eine bessere Anbindung des hellen Füllstoffs an den Kautschuk in der Mischung ermöglichen. Gelöst wird diese Aufgabe durch Kautschukmischungen auf der Basis von Dienkautschuken, die einen hellen Füllstoff, bevorzugt Kieselsäure, polysulfidische Alkoxysilane sowie Zinkdithiophosphat in Kombination mit Diphenylguanidin enthalten. Durch die gemeinsame Verwendung von Zinkdithiophosphat und Diphenylguanidin gelingt die gewünschte Verbesserung der Silanisierung der Kieselsäure mittels polysulfidischer Alkoxysilane, was zu einer Reduktion der erforderlichen Menge an polysulfidischen Alkoxysilanen führt. Eine vollständige Substitution von Diphenylguanidin durch Zinkdithiophosphat in silika- und silanhaltigen Mischungen von Kautschuken auf Dienbasis führt nach DE 699 03 563 T2 nicht zum gewünschten Ziel: In der Kautschukmischung gemäß Beispiel 14 (Tabelle 7) wird ausschließlich Zinkdithiophosphat ohne Diphenylguanidin zur Silanisierung der Kieselsäure eingesetzt wird. Die Eigenschaften dieser Mischung sind verglichen mit Mischungen, die DPG und Zinkdithiophosphat enthalten, sowohl im unvulkanisierten als auch im vulkanisierten Zustand verschlechtert. Es wird daher in der DE 69 903 563 T2 geschlussfolgert, dass das Zinkdithiophosphat in Abwesenheit des Guanidinderivates keine Aktivierungswirkung auf das Kupplungsmittel, d.h. das polysulfidische Alkoxysilan besitzt.

Die **Aufgabe der vorliegenden Erfindung** bestand somit in der Bereitstellung neuer Kautschukmischungen insbesondere für Reifenanwendungen, die einerseits als Vulkanisationsbeschleuniger keine der zuvor genannten toxischen Guanidine enthalten, eine hohe Verarbeitungssicherheit aufweisen, aber trotzdem bei einer sich anschließenden Schwefelvulkanisation effizient sind und somit bei niedrigen (molaren) Mengen an Vernetzern eine hohe Vernetzungsdichte liefern und ferner zu Vulkanisaten mit einem attraktiven Eigenschaftsprofil führen.

**Gelöst** wird diese Aufgabe durch vulkanisierbare Kautschukmischungen enthaltend
a) mindestens einen doppelbindungshaltigen Kautschuk,
b) mindestens ein hydroxylgruppenhaltiges Mikrogel,
c) mindestens einen hellen Füllstoff,
d) mindestens ein polysulfidhaltiges Alkoxysilan und
e) mindestens eine Polythiophosphorverbindung.

Ein weiterer **Gegenstand der Erfindung** ist ein Verfahren zur Herstellung dieser Kautschukmischungen und ein Verfahren zur Vernetzung dieser Kautschukmischungen unter Herstellung der entsprechenden Vulkanisate. Ein weiterer **Gegenstand der Erfindung** besteht in den Vulkanisaten, insbesondere in Gestalt von Formteilen.

**Überraschenderweise** ist ein Zusatz der unerwünschten Guanidine wie DPG oder DOTG als Vulkanisationsbeschleuniger nicht mehr erforderlich, wenn in der vulkanisierbaren Kautschukmischung eine Polythiophosphorverbindung in Kombination mit speziellen Mikrogelen eingesetzt wird. Auch ohne DPG oder DOTG zeigen die erfindungsgemäßen Kautschukmischungen eine sehr gute Vulkanisationscharakteristik mit guter Vulkanisationsdichte und führen zu Vulkanisaten und Formkörpern mit sehr guten mechanischen und physikalischen Eigenschaften. Besonders hervorzuheben ist die deutlich verbesserte Verarbeitungssicherheit, die in substanziell verlängerten t₁₀-Zeiten zum Ausdruck kommt.

Dies wird durch die spezielle Kombination von Komponenten in der Mischung erreicht, was aus den Dokumenten des Standes der Technik nicht entnehmbar war. Der Lehre von EP 1 203 786 kann nicht entnommen werden, dass Polythiophosphorverbindungen in Kombination mit O H-modifizierten Mikrogelen in Kautschukmischungen, die einen hellen Füllstoff wie insbesondere Silica und zur Füllstoffaktivierung polysulfidhaltige Alkoxysilane enthalten, Diphenylguanidin ersetzen können. Auch der EP-A-0 832 920 kann nicht entnommen werden, dass in Kautschukmischungen, die als Füllstoff im Wesentlichen Silica und zur Füllstoffaktivierung Silane enthalten, Diphenylguanidin durch Dithiophosphorverbindungen ersetzt werden kann. Zudem findet sich in keiner der Literaturstellen Offenbarung oder Hinweise, dass und gegebenenfalls wie die weiteren zuvor genannten Ziele, insbesondere die Steigerung der Verarbeitungssicherheit bei gleichbleibend guter Vulkanisatcharakteristik erreicht werden kann.

Optional enthalten die erfindungsgemäßen Kautschukmischungen noch ein oder mehrere weitere Additive, die in der Kautschukindustrie gängig sind, als Komponente(n) f). Alle Mischungsbestandteile a) bis e) sowie die optionalen weiteren Kautschukadditive f) werden nachfolgend im Detail erläutert.

### Komponente a): Doppelbindungshaltige Kautschuke

Die erfindungsgemäßen Kautschukmischungen enthalten einen oder mehrere ungesättigte Kautschuke, die über C=C Doppelbindungen in der Hauptkette verfügen. Bei diesen C=C doppelbindungshaltigen Kautschuken handelt es sich bevorzugt um solche auf Basis von Dienen. Besonders bevorzugt sind solche doppelbindungshaltigen Kautschuke, die praktisch keinen Gelanteil aufweisen und nach **DIN/ISO 1629** als "R"-Kautschuke bezeichnet werden.

Geeignete Kautschuke sind beispielsweise die Folgenden, die dem Fachmann hinreichend bekannt und von den unterschiedlichsten Anbietern käuflich erhältlich sind:
- NR: Naturkautschuk
- EPDM: Ethylen-Propylen-Dien Kautschuke
- SBR: Vinylaromat/Dien-Kautschuke,
- BR: Polybutadienkautschuk
- IR: Polyisopren
- SIBR: Styrol/Isopren/Butadien-Kautschuk
- BIR: Butadien/Isopren-Kautschuk
- IIR: Butylkautschuk (Isobuten/Isopren-Kautschuk)
- XIIR: Halobutylkautschuk, insbesondere Chlor- oder Brombutylkautschuk
- NBR: Nitrilkautschuk
- XNBR: carboxylierter Butadien/Acrylnitril-Kautschuk
- SNBR: Styrol/Butadien/Acrylnitril-Kautschuk
- XSBR: carboxylierter Styrol/Butadien-Kautschuk
- CR: Polychloropren
- ENR: epoxydierter Naturkautschuk

Bevorzugt werden in der erfindungsgemäßen Kautschukmischung NR (Naturkautschuk), SBR (Vinylaromat/Dien-Kautschuke), BR (Polybutadienkautschuk), IR (Polyisopren), IBR (Isopren/Butadien-Kautschuk), IIR (Isobuten/Isopren-Kautschuk), BIR (Butadien/Isopren-Kautschuk) und SIBR (Styrol/Isopren-Kautschuk) oder Mischungen daraus eingesetzt. Die nachfolgenden Erläuterungen sollen nur einige Kautschuke davon illustrieren, den Umfang der Erfindung jedoch nicht beschränken.

### SBR (Vinylaromat/Dien-Kautschuke):

Unter SBR-Kautschuken werden Kautschuke auf Basis von Vinylaromaten und Dienen verstanden und zwar sowohl Lösungs-SBR-Kautschuke, abgekürzt als "L-SBR", als auch Emulsions-SBR-Kautschuke, abgekürzt als "E-SBR".

Unter **L-SBR** versteht man Kautschuke, die in einem Lösungsprozess auf der Basis von Vinylaromaten und Dienen, bevorzugt konjugierten Dienen hergestellt werden (H. L. Hsieh, R. P. Quirk, Marcel Dekker Inc. New York-Basel 1996; I. Franta Elastomers and Rubber Compounding Materials; Elsevier 1989, Seite 73-74, 92-94; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 240-364). Geeignete vinylaromatische Monomere sind Styrol, o-, m- und p- Methylstyrol, technische Methylstyrolgemische, p-tert.-Butylstyrol, α-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt im Bereich von 50 bis 95 Gew. %, bevorzugt im Bereich von 60 bis 90 Gew. %. Der Gehalt an Vinylgruppen im einpolymerisierten Dien liegt im Bereich von 10 bis 90 %, der Gehalt an 1,4-trans-ständigen Doppelbindungen liegt im Bereich von 20 bis 80 % und der Gehalt an 1,4-cis ständigen Doppelbindungen ist komplementär zur Summe aus Vinylgruppen und 1,4-trans-ständigen Doppelbindungen. Der Vinylgehalt des L-SBR beträgt vorzugsweise > 20 %.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen (K.-H. Nordsiek, K.-H. Kiepert, GAK Kautschuk Gummi Kunststoffe 33 (1980), no. 4, 251-255).

Unter **L-SBR** sollen sowohl lineare als auch verzweigte oder endgruppenmodifizierte Kautschuke verstanden werden. Beispielsweise sind derartige Typen in DE 2034989C2 und JP-A-56-104 906 genannt. Als Verzweigungsmittel wird bevorzugt Siliciumtetrachlorid bzw. Zinntetrachlorid eingesetzt.

Die Herstellung dieser Vinylaromat/Dien-Kautschuke als Kautschukkomponente a) für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen vorteilhafterweise Mooney-Viskositäten (ML 1+4 bei 100°C) im Bereich von 20 bis 150 Mooneyeinheiten, vorzugsweise im Bereich von 30 bis 100 Mooneyeinheiten. Insbesondere die hochmolekularen L-SBR-Typen mit Mooney-Viskositäten von > 80 ME können Öle in Mengen von 30 bis 100 Gew.-Teile bezogen auf 100 Gew.-Teile Kautschuk enthalten. Ölfreie L-SBR-Kautschuke weisen Glastemperaturen im Bereich von -80° bis +20° C auf, bestimmt durch Differentialthermoanalyse (DSC).

Unter **E-SBR** versteht man Kautschuke, die in einem Emulsionsprozess auf der Basis von Vinylaromaten und Dienen, bevorzugt konjugierten Dienen, und gegebenenfalls weiteren Monomeren hergestellt werden (Ullmann's Encyclopedia of Industrial Chemistry, Vol A 23, Rubber 3. Synthetic, VCH Verlagsgesellschaft mbH, D-69451 Weinheim, 1993, S. 247-251). Vinylaromaten sind Styrol, p-Methylstyrol und alpha-Methylstyrol. Diene sind insbesondere Butadien und Isopren. Weitere Monomere sind insbesondere Acrylnitril. Der Gehalt an einpolymerisiertem Vinylaromat liegt im Bereich von 10 bis 60 Gew. %. Die Glastemperatur liegt üblicherweise im Bereich von -50 °C bis +20°C (bestimmt mittels DSC) und die Mooney-Viskositäten (ML 1+4 bei 100°C) liegen im Bereich von 20 bis 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien E-SBR-Kautschuke weisen Glastemperaturen von -70° bis +20° C auf, bestimmt durch Differentialthermoanalyse (DSC).

Sowohl E-SBR als auch S-SBR können in den erfindungsgemäßen Kautschukmischungen auch in ölversteckter Form eingesetzt werden. Die Öle dienen als Weichmacher. Anwendung finden dabei dem Fachmann bekannte und industrieübliche Öle. Bevorzugt sind solche, die wenig bis keine polyaromatischen Kohlenwasserstoffe enthalten. Geeignet sind TDAE (Treated Distillate Aromatic Extract), MES (Mild Extraction Solvate) und naphthenische Öle.

### Polybutadien (BR):

Polybutadien (BR) umfasst insbesondere zwei unterschiedliche Polybutadien-Typklassen. Die erste Klasse weist einen 1,4-cis-Gehalt von mindestens 90 % auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die Glastemperatur dieses Polybutadiens liegt bevorzugt bei ≤ -90°C (bestimmt mittels DSC).

Die zweite Polybutadien-Typklasse wird mit Li-Katalysatoren hergestellt und weist Vinylgehalte von 10% bis 90% auf. Die Glastemperaturen dieser Polybutadienkautschuke liegen im Bereich von -90°C bis +20 °C (bestimmt mittels DSC).

### Polyisopren (IR):

Polyisopren (IR) hat typischerweise einen 1,4-cis-Gehalt von mindestens 70%. Unter den Begriff IR fallen sowohl synthetisch hergestelltes 1,4-cis-Polyisopren als auch Naturkautschuk, (NR). Synthetisch wird IR sowohl mittels Lithium- als auch mit Hilfe von Ziegler/Natta-Katalysatoren hergestellt, vorzugsweise mit Titan- und Neodymkatalysatoren (Houben-Weyl, Methoden der Organischen Chemie, Thieme Verlag, Stuttgart, 1987, Band E 20, Seiten 822 bis 840; Ullmann's Encyclopedia of Industrial Chemistry, Vol. A 23, Rubber 3. Synthetic, VCH Verlagsgesellschaft mbH, D-69451 Weinheim, 1993, S. 239-364). Vorzugsweise wird Naturkautschuk eingesetzt.

Auch 3,4-Polyisopren, das Glastemperaturen im Bereich von -30 bis +30 °C aufweist, fällt unter IR.

### Komponente b): hydroxylgruppenhaltiges Mikrogel

Als Komponente b) wird mindestens ein hydroxylgruppenhaltiges Mikrogel eingesetzt.

Hydroxylgruppenhaltige Mikrogele im Sinne dieser Erfindung weisen Wiederholungseinheiten mindestens eines hydroxylgruppenhaltigen Monomers (D), mindestens eines vernetzenden Monomers (C) und mindestens eines konjugierten Diens (A) und/oder mindestens eines vinylaromatischen Monomers (B) auf.

Dies bedeutet, dass es möglich ist, ein hydroxylgruppenhaltiges Mikrogel mit Wiederholungseinheiten der drei Monomertypen (A), (C) und (D) bzw. (B), (C) und (D) einzusetzen. Alternativ kann ein hydroxylgruppenhaltiges Mikrogel mit Wiederholungseinheiten aller vier Monomertypen (A), (B), (C) und (D) eingesetzt werden.

Als **konjugierte Diene (A)** werden vorzugsweise 1,3-Butadien, Isopren, 2,3-Dimethyl-1,3-butadien und Chloropren verwendet. Bevorzugt sind 1,3-Butadien und Isopren.

Es werden vorzugsweise 0 bis 94,9 Gew.-%, bevorzugt 0 bis 94,0 Gew.-%, besonders bevorzugt 0 bis 93,5 Gew.-%, des Diens (A), jeweils bezogen auf 100 Gew.-Teile der bei der Polymerisation verwendeten Monomeren, eingesetzt.

Als **vinylaromatische Monomere (B)** werden beispielsweise Styrol, α-Methylstyrol, 2-Methylstyrol, 3-Methylstyrol, 4-Methylstyrol, 2,4-Dimethylstyrol, 2,4-Diisopropylstyrol, 4-tert.-Butylstyrol oder tert.-Butoxystyrol verwendet. Bevorzugt sind Styrol und α-Methylstyrol.

Es werden im Allgemeinen 0 bis 94,9 Gew.-%, vorzugsweise 0 bis 94,0 Gew.-%, besonders bevorzugt 0 bis 93,5 Gew.-%, der vinylaromatischen Monomeren (B), jeweils bezogen auf 100 Gew.-Teile der bei der Polymerisation verwendeten Monomeren, eingesetzt.

Als **vernetzende Monomere (C)** werden Monomere eingesetzt, die mindestens 2 Doppelbindungen im Molekül enthalten. Hierzu gehören die (Meth)acrylate von Diolen und mit 1 bis 20 Kohlenstoffatomen wie Ethandioldi(meth)acrylat, 1,2-Propandioldi(meth)acrylat, 1,3-Propandiol (meth)acrylat, 1,2-Butandioldi(meth)acrylat, 1,3-Butandioldi(meth)acrylat, 1,4-Butandioldi(meth)acrylat, 1,6-Hexandioldi-(meth)acrylat (C1), Polyethylengykoldi(meth)acrylate und Polypropylenglykoldi(meth)acrylate sowie Diole auf der Basis von Mischpolymerisaten von Ethylenoxid und Propylenoxid mit Polymerisationsgraden von 1 bis 25 (C2), Diole auf der Basis von polymerisiertem Tetrahydrofuran mit Polymerisationsgraden von 1 bis 25 (C3), die Bis- und Tris-(meth)acrylate von dreiwertigen Alkoholen wie Trimethylolpropandi(meth)acrylat, Trimethylolpropantri(meth)acrylat, Glycerindi(meth)acrylat und Glycerintri(meth)acrylat (C4), die Bis-, Tris- und Tetra-(meth)acrylate von vierwertigen Alkoholen wie Pentaerythritdi(meth)acrylat, Pentaerythrittri(meth)acrylat und Pentaerythrittetra(meth)acrylat (C5), aromatische Polyvinylverbindungen (C6) wie Divinylbenzol, Düsopropenylbenzol, Trivinylbenzol, sowie sonstige Verbindungen mit mindestens zwei Vinylgruppen wie Triallcyanurat, Triallylisocyanurat, Crotonsäurevinylester und Crotonsäureallylester (C7). Bevorzugt sind die Ester der (Meth)acrylsäure von Ethandiol, 1,3-Propandiol, 1,4-Butandiol, 1,6-Hexandiol, Trimethylolpropan, Pentaerythrit sowie die aromatische Polyvinylverbindung Divinylbenzol.

Die vernetzenden Monomeren (C) werden in einer Menge von 0,1 Gew.-% bis 15 Gew.-%, bevorzugt 0,5 bis 12,5 Gew.-%, besonders bevorzugt 1 bis 7,5 Gew.-%, jeweils bezogen auf 100 Gew.-Teile der bei der Polymerisation verwendeten Monomeren, eingesetzt.

Neben einer Reihe anderer Parameter, wie der bei der Polymerisation üblicherweise eingesetzten Reglermenge, des Polymerisationsumsatzes und der Polymerisationstemperatur, werden der Gelgehalt und der Quellungsindex der Mikrogele vor allem durch die Menge an vernetzendem Monomer (C) beeinflusst. Außerdem wird durch das Monomer (C) die Glastemperatur von entsprechenden unvernetzten, aus den Monomeren (A) und (B) bestehenden, Homo- und/oder Copolymeren erhöht.

Als hydroxylgruppenhaltige Monomere (D) werden im Allgemeinen Hydroxyalkyl(meth)acrylate (D1), Hydroxyalkylcrotonate (D2), Mono(meth)acrylate von Polyolen (D3), hydroxylgruppenmodifizierte ungesättigte Amide (D4), hydroxylgruppenhaltige aromatische Vinylverbindungen (D5) sowie sonstige hydroxylgruppenhaltige Monomere (D6) eingesetzt.

Hydroxyalkyl(meth)acrylate (D1) sind beispielsweise 2-Hydroxyethyl(meth)acrylat, 3-Hydroxyethyl(meth)acrylat, 2-Hydroxpropyl(meth)acrylat, 3-Hydroxpropyl(meth)acrylat, 2-Hydroxybutyl(meth)acrylat, 3-Hydroxybutyl(meth)acrylat und 4-Hydroxybutyl(meth)acrylat. Hydroxyalkylcrotonate (D2) sind beispielsweise 2-Hydroxyethylcrotonat, 3-Hydroxyethylcrotonat, 2-Hydroxpropylcrotonat, 3-Hydroxpropylcrotonat, 2-Hydroxybutylcrotonat, 3-Hydroxybutylcrotonat und 4-Hydroxybutylcrotonat.

Mono(meth)acrylate von Polyolen (D3) leiten sich von zwei- und mehrwertigen Alkoholen wie Ethylenglykol, Propandiol, Butandiol, Hexandiol, Trimethylolpropan, Glycerin, Pentaerythrit sowie von oligomerisiertem Ethylenglykol und Propylenglykol, die 1 bis 25 der genannten Glykoleinheiten enthalten, ab.

Hydroxylgruppenmodifizierte ungesättigte Amide (D4) sind beispielsweise Monomere wie N-Hydroxymethyl(meth)acrylamid, N-(2-Hydroxyethyl(meth)acrylamid und N,N-Bis(2-Hydroxyethyl) (meth)acrylamid.

Hydroxylgruppenhaltige aromatische Vinylverbindungen (D5) sind 2-Hydroxystyrol, 3-Hydroxystyrol, 4-Hydroxystyrol, 2-Hydroxy-α-methylstyrol, 3-Hydroxy-α-methylstyrol, 4-Hydroxy-α-methylstyrol und 4-Vinylbenzylakohol.

Ein weiteres hydroxylgruppenhaltiges Monomer (D6) ist beispielsweise (Meth)allylalkohol.

Die hydroxylgruppenhaltigen Monomeren (D) werden in einer Menge von vorzugsweise 0,1 bis 20 Gew.-%, bevorzugt 0,5 bis 15 Gew.-%, besonders bevorzugt 1 bis 12,5 Gew.-%, jeweils bezogen auf 100 Gew.-Teile der bei der Polymerisation verwendeten Monomeren, eingesetzt.

Durch das Verhältnis der einpolymerisierten Monomeren (A), (B), (C) und (D) wird die Glastemperatur des Mikrogels festgelegt. Für eine Abschätzung der Glastemperatur kann die Fox-Flory-Beziehung herangezogen werden, wobei für die Glastemperatur des Mikrogels in erster Näherung der Gewichtsanteil der Monomeren (A) und (B) entscheidend ist.

Die Mikrogel-Komponente b) wird in Mengen von 1 bis 100 Gew.-Teile, vorzugsweise 2,5 bis 50 Gew.-Teile, besonders bevorzugt 3 bis 30 Gew.-Teile mindestens eines hydroxylgruppenhaltigen Mikrogels, eingesetzt.

Diese hydroxylgruppenhaltigen Mikrogele besitzen typischerweise einen Gelgehalt von mehr als 70 Gew.-%, vorzugsweise mehr als 75 Gew.-%, besonders bevorzugt mehr als 80 Gew.-%. Sie weisen darüber hinaus einen Quellungsindex von im Allgemeinen weniger als 30, vorzugsweise weniger als 25, besonders bevorzugt weniger als 20, auf und verfügen über einen Gehalt einpolymerisierter hydroxylhaltiger Monomere von größer als 0,1 Gew.-%. Die Hydroxylzahl der erhaltenen Mikrogele ist im Allgemeinen größer als 0,5. Die Mikrogele besitzen ferner eine gute Scher- und Lagerstabilität. Die Glastemperaturen hydrogxylgruppenhaltigen Mikrogele liegen üblicherweise im Bereich von -78 °C bis 150 °C, vorzugsweise zwischen -78 °C bis 125 °C.

Bevorzugt sind Mikrogele auf Basis der Monomere Butadien, Trimethylolpropantrimethacrylat und Hydroxyethylmethacrylat, ferner Mikrogele auf der Basis der Monomere Butadien, Styrol, Trimethylolpropantrimethacrylat und Hydroxyethylmethacrylat, sowie Mikrogele auf Basis der Monomere Styrol, Trimethylolpropantrimethacrylat und Hydroxyethylmethacrylat.

Die Herstellung der hydroxylgruppenhaltigen Mikrogele erfolgt über eine übliche Emulsionspolymerisation der entsprechenden Monomere, vorzugsweise bei einer Temperatur von 10 bis 100 °C, besonders bevorzugt 12 bis 90 °C, insbesondere 15 bis 50 °C. Es ist möglich, die Emulsionspolymerisation in isothermer, teiladiabatischer oder volladiabatischer Fahrweise durchzuführen und es kann sich ein Verfahrensschritt der Koagulation anschließen, welche bei Temperaturen oberhalb der Glastemperatur des Mikrogels durchgeführt wird. Die Koagulationstemperatur liegt dabei vorzugsweise mindestens 10 °C, besonders bevorzugt mindestens 15 °C, insbesondere mindestens 20 °C, höher als die Glastemperatur des Mikrogels. Die Einhaltung dieser erfindungsgemäß vorgesehenen Koagulationstemperaturen hat einen mitbestimmenden Einfluss auf die Krümelgröße der erhaltenen Mikrogele. Geeignete Polymerisationsinitiatoren sind Verbindungen, die in Radikale zerfallen. Hierzu gehören Verbindungen, die eine -O-O- Einheit (Peroxo-Verbindungen), eine -O-O-H Einheit (Hydroperoxyd), sowie eine -N=N- Einheit (Azoverbindung) enthalten. Auch eine Initiierung über Redoxsysteme ist möglich. Des Weiteren kann unter Zusatz von dem Fachmann bekannten Reglersubstanzen gearbeitet werden. Die Beendigung der Emulsionspolymerisation erfolgt durch dem Fachmann ebenfalls geläufige Stopper. Es hat sich ferner bewährt, die Emulsionspolymerisation unter Einsatz mindestens eines Salzes einer modifizierten Harzsäure (I) und mindestens eines Salzes einer Fettsäure (II) durchzuführen.

Modifizierte Harzsäuren sind dabei Verbindungen, die durch Dimerisierung, Disproportionierung und/oder Hydrierung von unmodifizierten Harzsäuren erhalten werden. Als unmodifizierte Harzsäuren sind beispielsweise Pimarsäure, Neoabietinsäure, Abietinsäure, Levopimarsäure und Palustrinsäure geeignet. Bevorzugt ist die modifizierte Harzsäure eine disproportionierte Harzsäure (Ullmann's Encyclopedia of Industrial Chemistry, 6. Auflage, Band 31, S. 345-355), die kommerziell erhältlich ist. Die eingesetzten Harzsäuren sind aus Wurzeln, Kiefernbalsam und Tallöl gewonnene tricyclische Diterpencarbonsäuren. Diese können z.B. zu disproportionierten Harzsäuren umgearbeitet werden, wie es in W. Bardendrecht, L.T. Lees in Ullmanns Encyclopädie der Technischen Chemie, 4. Auflage, Bd. 12, 525 - 538, Verlag Chemie, Weinheim - New-York 1976 beschrieben ist. Daneben wird mindestens ein Salz einer Fettsäure eingesetzt. Diese enthalten vorzugsweise 6 bis 22 C-Atome, besonders bevorzugt 6 bis 18 C-Atome pro Molekül. Sie können vollständig gesättigt sein oder eine oder mehrere Doppelbindungen oder Dreifachbindungen im Molekül enthalten. Beispiele für solche Fettsäuren sind Capronsäure, Laurinsäure, Myristinsäure, Palmitinsäure, Stearinsäure, Ölsäure, Linolsäure und Linolensäure. Die Carbonsäuren können in einer weiteren Ausgestaltung der vorliegenden Erfindung auch in herkunftsspezifischen Mischungen, wie beispielsweise Castoröl, Baumwollsaat, Erdnussöl, Leinsamenöl, Kokosnussfett, Palmkermöl, Olivenöl, Rapsöl, Sojabohnenöl, Fischöl und Rindertalg, vorliegen (Ullmann's Encyclopedia of Industrial Chemistry, 6. Auflage, Band 13, S. 75-108). Bevorzugte Carbonsäuren leiten sich von Rindertalg ab und sind teilhydriert. Insbesondere bevorzugt ist daher die teilhydrierte Talgfettsäure. Sowohl die Harzsäuren als auch die Fettsäuren sind kommerziell als freie Carbonsäuren, in teil- oder vollneutralisierter Form erhältlich. Für die Ermittlung des zur Herstellung der Salze bei der Polymerisation notwendigen Alkalizusatzes werden die zum Einsatz kommenden Harz- und Fettsäuren durch acidimetrische Titration charakterisiert). Auf diese Weise werden die Gehalte an freien Carbonsäuren und an Emulgatorsalzen ermittelt, um die für die gezielte Einstellung der Neutralisationsgrade der bei der Polymerisation eingesetzten Harz/Fettsäuregemische zu berechnen. Das zuvor beschriebene Herstellungsverfahren unter Einsatz der speziellen Emulgatoren ist Gegenstand einer noch nicht veröffentlichen deutschen Patentanmeldung.

### Komponente c): Heller Füllstoff

Erfindungsgemäß können ein oder mehrere helle verstärkende Füllstoffe als Komponente c) verwendet werden. "Hell" im Sinne der Erfindung schließt insbesondere Ruß aus. Bei dem verstärkenden hellen Füllstoff handelt es sich vorzugsweise um Kieselsäure (SiO₂) oder Aluminiumoxid (Al₂O₃) oder Gemische davon.

Wird Kieselsäure oder "Silica" (Ullmann's Encyclopedia of Industrial Chemistry, VCH Verlagsgesellschaft mbH, D-69451 Weinheim, 1993, "Silica", S.635-645) verwendet, so handelt es sich um pyrogene (ibid. S. 635-642) oder um Fällungskieselsäure (ibid. 642-645). Fällungskieselsäuren werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Bevorzugt sind Fällungskieselsäuren mit spezifischen Oberflächen von 5 bis 1000 m²/g, vorzugsweise von 20 bis 400 m²/g, jeweils bestimmt nach BET. Für die Herstellung von Reifenlaufflächen mit geringem Rollwiderstand sind hochdispergierbare Fällungskieselsäuren bevorzugt. Beispiele für bevorzugte hochdispergierbare Kieselsäuren schließen beispielsweise ein: Perkasil® KS 430 (AKZO), BV 3380 und Ultrasil®7000 (Evonik-Degussa), Zeosil® 1165, MP 1115 MP und HRS 1200 MP (Rhodia), Hi-Sil 2000 (PPG), Zeopol® 8715, 8741 oder 8745 (Huber), Vulkasil® S, N und C von Lanxess und behandelte Fällungskieselsäuren wie beispielsweise mit Aluminium "dotierte" Kieselsäuren, die in der EP-A-0 735 088 beschrieben sind. Ein oder mehrere Kieselsäuretypen können verwendet werden. Aluminiumoxid kann ebenfalls eingesetzt werden, beispielsweise als hochdispergierbares Aluminiumoxid wie in der EP-A-0 810 258 beschrieben. Beispiele schließen ein: A125 oder CR125 (Baikowski), APA- 100RDX (Condea), Aluminiumoxid C (Degussa) und AKP-GO 15 (Sumitomo Chemicals).

Der helle verstärkende Füllstoff kann in Form von Pulvern, Mikroperlen, Granulaten oder Kugeln vorliegen. In einer bevorzugten Ausführungsform werden Kieselsäuren und/oder Aluminiumoxide verwendet. Besonders bevorzugt sind Kieselsäuren, insbesondere Fällungskieselsäuren.

Der Gesamtgehalt an verstärkendem hellen Füllstoff (und gegebenenfalls Ruß) liegt üblicherweise im Bereich von größer 0 bis zu 300 Gew.-Teilen, vorzugsweise im Bereich von 20 bis 200 Gew.-Teilen, noch bevorzugter 30 bis 150 Gew.-Teilen und besonders bevorzugt 50 bis 130 Gew.-Teilen pro 100 Gew.-Teile der Komponente(n) a). Die optimale Menge hängt ab von der Art des verwendeten hellen Füllstoffs und der gewünschten Anwendung. Ein Fahrradreifen erfordert einen geringeren Verstärkungsgrad als ein Luftreifen für Personenkraftwagen oder Nutzfahrzeuge wie Lastkraftwagen.

Die Bezeichnung "heller Füllstoff' schließt zwar Ruß aus, erfindungsgemäß ist es gleichwohl möglich, zusätzlich zu dem hellen Füllstoff als optionale Komponente f) ein gewisse Menge Ruß zu verwenden, insbesondere Ruße vom Typ HAF, ISAF und SAF, die üblicherweise in Luftreifen und insbesondere in den Laufstreifen von Luftreifen eingesetzt werden. Als Beispiele für diese Ruße können N 115, N220, N134, N234, N339, N347 und N375 genannt werden, die dem Fachmann hinreichend bekannt und von diversen Herstellern käuflich erhältlich sind.

Wird Russ zugesetzt, so beträgt der Anteil des hellen verstärkenden Füllstoffs jedoch mehr als 50 Gew.-%, vorzugsweise mehr als 80 Gew.-%, bezogen auf die Gesamtmenge des verwendeten verstärkenden Füllstoffs. Der Anteil von Ruß ist dann weniger als 50 Gew.-% und bevorzugter weniger als 20 Gew.-%. In einer bevorzugten Ausführungsform wird in der erfindungsgemäßen Kautschukmischung kein Ruß zugesetzt.

### Komponente d): Polysulfidhaltiges Alkoxysilan (Kupplungsmittel)

Bei dem erfindungsgemäß eingesetzten polysulfidhaltigen Alkoxysilan handelt es sich um ein sogenanntes Kupplungsmittel zur Dispergierung und Einbindung des verstärkenden Füllstoffs in die Elastomermatrix. Diese tragen, wie dem Fachmann bekannt, zwei Arten von funktionellen Gruppen, die Alkoxysilylgruppe, die an den hellen Füllstoff bindet, und die schwefelhaltige Gruppe, die an den Kautschuk bindet. Erfindungsgemäß können ein oder mehrere der polysulfidhaltigen Alkoxysilane in Kombination verwendet werden.

Als polysulfidhaltige Alkoxysilane sind solche der Formeln (I) und (II) besonders geeignet, ohne dass die nachfolgenden Definitionen einschränkend zu verstehen sind. Bei denjenigen der Formel (I) handelt es sich um solche, die zu beiden Seiten des zentralen Schwefels eine entsprechend substituierte Silylgruppe tragen, während dies in der Formel (II) nur an einer Seite der Fall ist.

Einsetzbar sind somit polysulfidhaltige Alkoxysilane der allgemeinen Formel (I) oder (II) 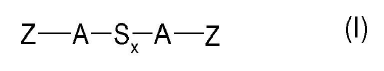 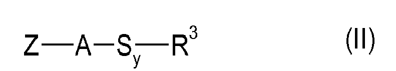 worin
- x: eine ganze Zahl von 2 bis 8 darstellt,
- y: eine ganze Zahl von 1 bis 8 darstellt,
- A: gleich oder verschieden sind und eine zweiwertige Kohlenwasserstoffgruppe ("Spacer") darstellen
- Z: gleich oder verschieden sind und eine der nachfolgend angegebenen Formeln besitzen 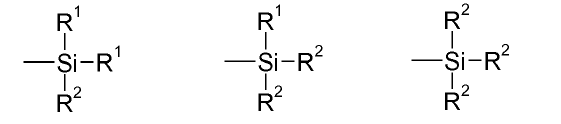 worin
R¹ gleich oder verschieden, substituiert oder unsubstituiert sein können und C₁-C₁₈ Alkyl, C₅-C₁₈ Cycloalkyl oder C₆-C₁₈ Aryl bedeuten und
R² gleich oder verschieden, substituiert oder unsubstituiert sein können und C₁-C₁₈ Alkoxy, C₅-C₁₈ Cycloalkoxy oder C₆-C₁₈ Aryloxy bedeuten,
und
- R³: Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest mit nachfolgenden Strukturen bedeutet 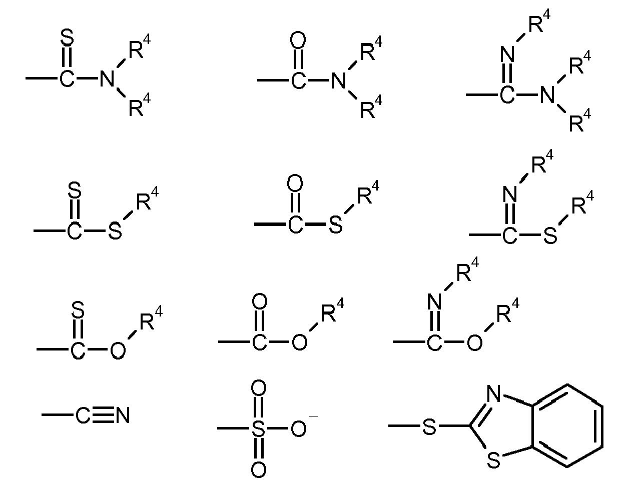
worin R⁴ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht

In den polysulfidhaltigen Alkoxysilanen der allgemeinen Formel (I) ist die Zahl x vorzugsweise eine ganze Zahl von 2 bis 5. Im Falle eines Gemisches von polysulfidhaltigen Alkoxysilanen der oben angegebenen Formel (I), und insbesondere im Falle von üblichen, im Handel erhältlichen Gemischen, ist der Mittelwert von "x" eine reelle Zahl vorzugsweise im Bereich von 2 bis 5 und insbesondere in der Nähe von 2 oder 4. Die Erfindung kann vorteilhaft mit Alkoxysilansulfiden mit x=2 und x=4 durchgeführt werden.

In den polysulfidhaltigen Alkoxysilanen der allgemeinen Formeln (I) und (II) sind die substituierten oder unsubstituierten **Gruppen A** gleich oder verschieden und stehen vorzugsweise für eine zweiwertige aliphatische, heteroaliphatische, aromatische oder heteroaromatische Kohlenwasserstoffgruppe, die gesättigt oder ein- oder mehrfach ungesättigt ist und 1 bis 20, bevorzugt 1 bis 18 Kohlenstoffatome sowie optional 1 bis 3 Heteroatome, insbesondere Sauerstoff, Schwefel oder Stickstoff, aufweist. Als Gruppe A sind insbesondere C₁-C₁₈ Alkylengruppen oder C₆-C₁₂ Arylengruppen geeignet, besonders bevorzugt sind C₁-C₁₀ Alkylengruppen, insbesondere C₂-C₄ Alkylengruppen und ganz besonders bevorzugt Propylen.

In den polysulfidhaltigen Alkoxysilanen der allgemeinen Formeln (I) und (II) sind **R¹** gleich oder verschieden und bedeuten vorzugsweise C₁-C₆ Alkyl, Cyclohexyl oder Phenyl, besonders bevorzugt C₁-C₄ Alkyl und insbesondere Methyl und/oder Ethyl.

In den polysulfidhaltigen Alkoxysilanen der allgemeinen Formeln (I) und (II) sind **R²** gleich oder verschieden und bedeuten vorzugsweise C₁-C₁₀-Alkoxy, besonders bevorzugt C₁-C₈₋Alkoxy, insbesondere Methoxy und/oder Ethoxy, C₅-C₈ Cycloalkoxy, besonders bevorzugt Cyclohexyloxy, oder C₆-C₁₄ Aryloxy, besonders bevorzugt Phenoxy.

Diese sogenannten "symmetrischen" polysulfidhaltigen Alkoxysilane sowie verschiedene Verfahren zu ihrer Herstellung sind z.B. in US-A-5,684,171 und US-A-5,684,172 beschrieben, die für x im Bereich von 2 bis 8 eine detaillierte Liste von bekannten Verbindungen angeben.

Das erfindungsgemäß verwendete polysulfidhaltige Alkoxysilan ist vorzugweise ein Polysulfid, insbesondere ein Disulfid oder ein Tetrasulfid von Bis(C₁-C₄)trialkoxysilylpropyl, noch bevorzugter Bis(2-ethoxysilylpropyl) oder Bis(3-trimethoxysilylpropyl) oder Bis(triethoxysilylpropyl). Das Disulfid von Bis(triethoxysilylpropyl) (auch TESPD genannt) der Formel [(C₂H₅O)₃Si(CH₂)₃S]₂ ist z.B. von Evonik Degussa unter den Bezeichnungen Si 266^{®} oder Si 75^{®} (im zweiten Fall in Form eines Gemisches von Disulfid und Poly-sulfid) oder auch von der Firma Witco unter der Bezeichnung Silquest A 1589 im Handel erhältlich. Das Tetrasulfid von Bis(triethoxysilylpropyl) (auch TESPT genannt) der Formel [(C₂H₅O)₃Si(CH₂)₃S₂]₂ ist z.B. von Evonik Degussa unter der Bezeichnung SI 69^{®} (oder als X50-S^{®} mit 50 Gew.% Ruß N330 als Träger) oder von der Firma Witco unter der Bezeichnung Silquest A 1289 (wobei es sich in beiden Fällen um ein kommerzielles Gemisch von Polysulfid mit einem Mittelwert für x in der Nähe von 4 handelt) erhältlich.

Die polysulfidhaltigen Alkoxysilane werden in den erfindungsgemäßen Kautschukmischungen zweckmäßigerweise mit 0,2 bis 12 Gew.-Teilen, bevorzugt mit 1 bis 10 Gew.-Teilen und besonders bevorzugt mit 2 bis 9 Gew.-Teilen, bezogen auf 100 Gew. Teile der Komponente(n) a) eingesetzt.

### Komponente e) Polythiophosphorverbindung

Die erfindungsgemäße Kautschukmischung enthält als Komponente e) mindestens eine Verbindung der allgemeinen Formel (III) oder (IV). 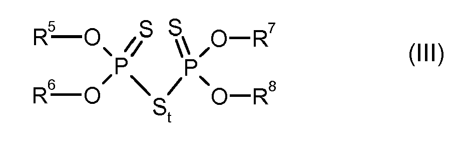 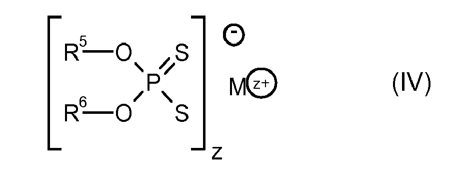 worin
- R⁵, R⁶, R⁷ und R⁸: gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
- t: für eine ganze Zahl von 1 bis 8, bevorzugt 3 bis 6 steht,
- z: für eine ganze Zahl von 1 bis 3, bevorzugt 1 bis 2 steht, und
- M^{z+}: ein Metallkation mit der Ladung z+ bedeutet, wobei z+ für 1 bis 3, bevorzugt 1 und 2 steht, oder ein Kation der Formel N(R⁹)₄⁺bedeutet, worin R⁹ gleich oder verschieden sind und Wasserstoff und/oder die Bedeutungen R⁵ besitzen können.

Bei den Verbindungen gemäß allgemeiner Formel (III) handelt es sich um Phosphorylpolysulfide und bei den Verbindungen gemäß allgemeiner Formel (IV) um Dithiophosphate.

Folgende Metalle kommen für M in Frage: Li, Na, K, Rb, Cs, Be, Mg, Ca, Sr, Ba, Al, Nd, Zn, Cd, Ni und Cu. Bevorzugt sind: Na, K, Zn und Cu. Ebenfalls bevorzugt steht M^{z+} für NH₄⁺.

Folgende Metalldithiophosphate sind von besonderem Interesse: 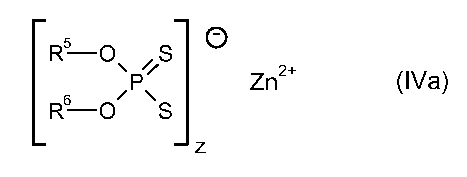 worin
- z: gleich 2 ist
- R⁵ und R⁶: gleich oder verschieden sind und Wasserstoff oder eine geradekettige oder verzweigte, substituierte oder unsubstituierte Alkylgruppe oder Cycloalkylgruppe mit 1 bis 12 Kohlenstoffatomen, besonders bevorzugt eine C₂-C₁₂ Alkylgruppe oder eine C₅-C₁₂ Cycloalkylgruppe und insbesondere Ethyl, Propyl, Isopropyl, Butyl, Isobutyl, Cyclohexyl, Ethylhexyl oder Dodecyl bedeuten.

Derartige Verbindungen der allgemeinen Formel (III) oder (IV) können optional auch in geträgerter oder polymergebundener Form eingesetzt werden.

Üblicherweise werden 1 bis 5 Gew.-Teile, vorzugsweise 1,5 bis 4,0 Gew.-Teile und besonders bevorzugt 1,8 bis 3,5 Gew.-Teile mindestens einer Polythiophosphorverbindung eingesetzt.

Das folgende spezielle Phosphorylpolysulfid ist bevorzugt: 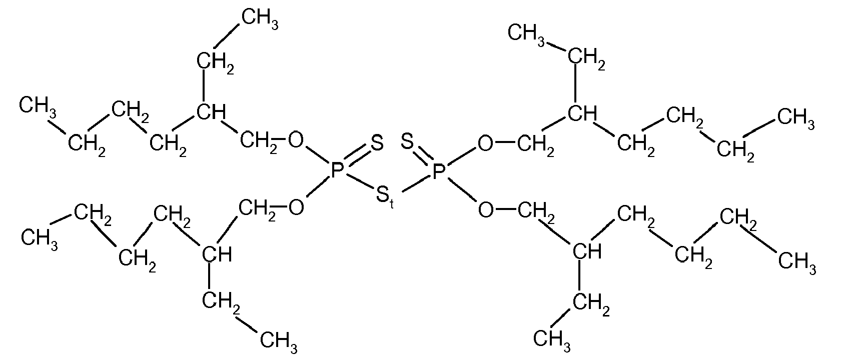 mit t = 2 bis 4.

Diese Verbindung ist als **Rhenocure® SDT/S** gebunden an 30 Gew.-% hochaktive Kieselsäure der Rhein Chemie Rheinau GmbH im Handel.

Ferner bevorzugt ist das folgende Zinkdithiophosphat

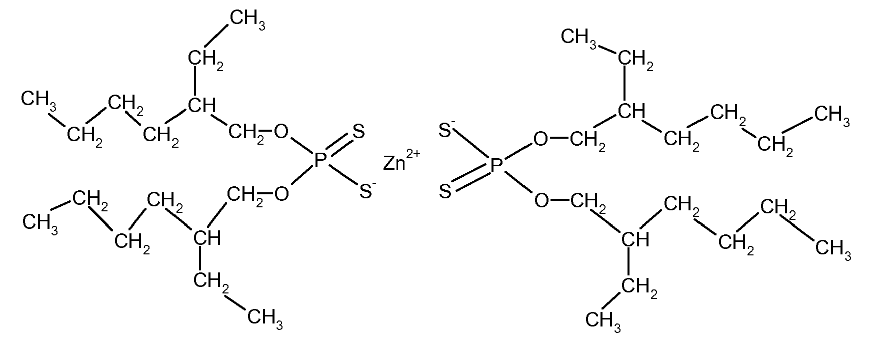

Diese Verbindung ist als **Rhenocure® ZDT/G** gebunden an 30 Gew.-% hochaktive Kieselsäure und 20 Gew.-% Polymerbinder der Rhein Chemie Rheinau GmbH im Handel erhältlich.

### Weitere optionale Komponente(n) f):

### • Schwefel und Schwefelspender

Zur Vernetzung der erfindungsgemäßen Kautschukmischungen eignet sich als Vernetzer entweder Schwefel in Form elementaren Schwefels oder ein Schwefelspender. Elementarer Schwefel wird als löslicher oder unlöslicher Schwefel eingesetzt.

Unter löslichem Schwefel versteht man die bei gewöhnlichen Temperaturen einzige stabile Form, den gelben Cyclooctaschwefel (S₈) oder α-S, die aus typischen rhombischen Kristallen besteht und in Schwefelkohlenstoff hoch löslich ist. So lösen sich bei 25°C in 100g CS₂ 30g α-S (Stichwort "Schwefel" des online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 - 95 % in Schwefelkohlenstoff unlöslich.

Beispiele für Schwefelspender sind Caprolactam Disulfid (CLD), Dithiomorpholin (DTDM) oder 2-(4-Morpholinodithio)benzothiazol (MBSS). (W. Hoffmann "Kautschuktechnologie", S. 254 ff, Gentner Verlag Stuttgart (1980)).

Schwefel und/oder Schwefelspender werden bevorzugt in der erfindungsgemäßen Kautschukmischung in einer Menge im Bereich von 0,1 bis 15 Gew.-Teilen, bevorzugt 0,1-10 Gew.-Teilen, bezogen auf 100 Gew.-Teile der Komponente(n) a) eingesetzt.

### • Vulkanisationsbeschleuniger

In der erfindungsgemäßen Kautschukmischung können ferner auch noch einer oder mehrere weitere Vulkanisationsbeschleuniger zum Einsatz kommen, die für die Schwefelvulkanisation geeignet sind.

Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Im Rahmen der vorliegenden Erfindung können solche Vulkanisationsbeschleuniger z.B. ausgewählt werden aus der Gruppe der Xanthogenate, Dithiocarbamate, Tetramethylthiuram-disulfide, Thiurame, Thiazole, Thioharnstoff-Derivate, Amin-Derivate wie Tetramine, Sulfenimide, Piperazine, Amincarbamate, Sulfenamide, Bisphenol- und Triazin-Derivate.

Geeignete Vulkanisationsbeschleuniger sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthiohamstoff (DETU), 2-Mercaptobenzothiazol (MBT) und dessen Zinksalze (ZMBT), Kupferdimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methylpiperazin); Hexamethylendiamincarbamat (HMDAC); Benzothiazyl-2-tert.-butylsulfenamid (TOBS), N,N'-Diethylthiocarbamyl-N'-cyclohexylsulfenamid (DETCS), N-Oxidiethylendithio-carbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei-, Kupfer- und Erdalkalisalze von Dithiocarbaminsäuren; Pentamethylenammonium-N-pentamethylendithiocarbamat; Cyclohexylethylamin; Dibutylamin; Polyethylenpolyamine und Polyethylenpolyimine wie z.B. Triethylentetramin (TETA) handeln.

Die Vulkanisationsbeschleuniger werden bevorzugt in einer Menge im Bereich von 0,1 bis 15 Gew.-Teilen, bevorzugt 0,1-10 Gew.-Teilen, bezogen auf 100 Gew.-Teile der Komponente(n) a) eingesetzt.

### • Zinkoxid und Stearinsäure oder Zinkstearat

In der erfindungsgemäßen Mischung kann ferner Zinkoxid als Aktivator für die Schwefelvulkanisation enthalten sein. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit Die erfindungsgemäße Kautschukzusammensetzung enthält ferner Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion der Vulkanisationsbeschleuniger führt. Ferner kommt es zu einer Komplexbildung mit Zinkionen im Rahmen der Schwefelvulkanisation.

Zinkoxid wird in der erfindungsgemäßen Zusammensetzung üblicherweise in einer Menge von 0,5 bis 15 Gew.-Teilen, bevorzugt 1 bis 7,5 Gew.-Teilen, besonders bevorzugt 1 bis 5 Gew.%, bezogen auf 100 Gew.-Teile der Komponente(n) a) eingesetzt.

Stearinsäure wird in der erfindungsgemäßen Zusammensetzung in einer Menge von 0,1 bis 7, bevorzugt 0,25 bis 7 Gew.-Teilen, bevorzugt 0,5 bis 5 Gew.-Teilen, bezogen auf 100 Gew.-Teile der Komponente(n) a) eingesetzt.

Alternativ oder aber auch zusätzlich zur Kombination aus Zinkoxid und Stearinsäure kann Zinkstearat eingesetzt werden. In diesem Fall wird üblicherweise eine Menge von 0,25 bis 5 Gew.-Teilen, bevorzugt 1 bis 3 Gew.-Teile, jeweils bezogen auf 100 Gew.-Teile der Komponente(n) a) verwendet.

Weitere optional als Komponente(n) f) der erfindungsgemäßen Zusammensetzung zuzusetzende Kautschukadditive umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol oder andere Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vulkanisationsverzögerer** können den erfindungsgemäßen Zusammensetzungen beispielsweise Sulfonamide, Sulfanilide oder Phthalimide zugesetzt werden. Geeignet sind z.B. N-Trichlormethylsulfenylbenzolsulfanilid, N-Cyclohexylthiophthalimid, Phtalsäureanhydrid (PTA), Salicylsäure (SAL), N-Nitrosodiphenylamin (NDPA), Trichlormelamin (TCM), Maleinsäureanhydrid (MSA) und N-Trichlormethylsulfenylbenzolsulfanilid (letzteres kommerziell unter der Bezeichnung Vulkalent® E erhältlich). Entsprechende Vulkanisationsverzögerer sind ebenfalls in J. Schnetger, "Lexikon der Kautschuktechnik", 3. Auflage, Hüthig Verlag, Heidelberg, 2004, Seite 590 erwähnt.

Als **Antioxidantien** können den erfindungsgemäßen Zusammensetzungen z.B. Mercaptobenzimidazol (MBI), 2-Mercaptomethylbenzimidazol (2-MMBI), 3-Mercaptomethylbenzimidazol (3-MMBI), 4-Mercaptomethylbenzimidazol (4-MMBI), 2,2,4-Trimethyl-1,2-dihydrochinlin (TMQ), Nickeldibutyldithiocarbamat (NDBC), 2,6-Di-tert.-butyl-p-kresol (BHT) und 2,2'-Methylen-bis(4-methyl-6tert.butyl-phenol) (BKF) zugesetzt werden. Diese Antioxidantien können auch in nicht-staubenden, insbesondere auch polymergebundenen Lieferformen eingesetzt werden (als "Microgranulat" (MG) oder "Microgranulat coated" (MGC)).

Darüberhinaus sind auch **Alterungsschutzmittel** als Komponente(n) f) einsetzbar, beispielsweise in Form verfärbender Alterungsschutzmittel mit Ermüdungs- und Ozonschutzwirkung, z.B. N-Isopropyl-N'-phenyl-p-phenylen-diamin (IPPD); verfärbender Alterungsschutzmittel mit Ermüdungsschutz, aber ohne Ozonschutzwirkung, z.B. Phenyl-α-naphthylamin (PAN); verfärbender Alterungsschutzmittel mit geringer Ermüdungs- und ohne Ozonschutzwirkung, z.B. octyliertes Diphenylamin (ODPA); nicht verfärbender Alterungsschutzmittel mit Ermüdungsschutz und gutem Hitzeschutz, z.B. styrolisierte Phenole (SPH); nicht verfärbender Alterungsschutzmittel ohne Ermüdungs- oder Ozonschutzwirkung, z.B. 2,6-Di-tert.-butyl-p-kresol (BHT); nicht verfärbender Ozonschutzmittel ohne Alterungsschutzwirkung, z.B. Wachse (Gemische aus speziellen Kohlenwasserstoffen), cyclischer Acetale und Enolether; und in Form von Hydrolyseschutzmitteln, wie z.B. Polycarbodiimiden.

Ferner können den erfindungsgemäßen Zusammensetzungen auch Mastikationschemikalien zugesetzt werden, welche vorzugsweise ausgewählt werden aus der Gruppe bestehend aus Thiophenolen, Thiophenolzinksalzen, substituierten aromatischen Disulfiden, Peroxiden, Derivaten von Thiocarbonsäuren, Hydrazinderivaten, Nitrosoverbindungen und Metallkomplexen, besonders bevorzugt Eisenhemiporphyrazin, Eisenphthalocyanin, Eisenacetonylacetat und dessen Zn-Salz.

Die als Komponente(n) f) verwendbaren Kautschukadditive werden in üblichen Mengen, die sich u.a. nach dem Verwendungszweck richten, eingesetzt. Übliche Mengen für einzelne Kautschukadditive liegen beispielsweise bei 0,1 bis 50 phr.

**Bevorzugt** enthält die erfindungsgemäßen Kautschukmischung neben den Komponenten a), b), d) und e) als Komponente c) mindestens eine Kieselsäure als hellen Füllstoff.

**Bevorzugt** ist ferner eine erfindungsgemäße Kautschukmischung enthaltend
a) mindestens einen doppelbindungshaltigen Kautschuk,
b) mindestens ein hydroxylgruppenhaltiges Mikrogel,
c) mindestens eine Kieselsäure als hellen Füllstoff,
d) mindestens ein polysulfidhaltiges Alkoxysilan der allgemeinen Formel (I) oder (II) 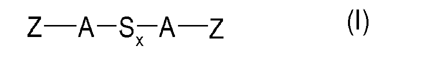 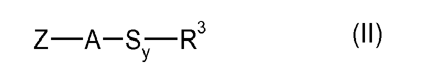 worin
   - x: eine ganze Zahl von 2 bis 8 darstellt,
   - y: eine ganze Zahl von 1 bis 8 darstellt,
   - A: gleich oder verschieden sind und eine zweiwertige Kohlenwasserstoffgruppe bedeuten,
   - Z: gleich oder verschieden sind und eine der nachfolgend angegebenen Formeln besitzen, 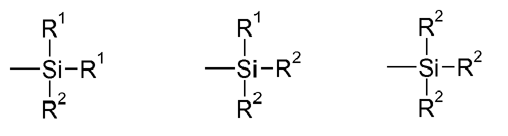 worin
   R¹ gleich oder verschieden, substituiert oder unsubstituiert sein können und eine C₁-C₁₈ Alkyl, C₅-C₁₈ Cycloalkyl oder C₆-C₁₈ Aryl darstellen und
   R² gleich oder verschieden, substituiert oder unsubstituiert sein können und C₁-C₁₈ Alkoxy, C₅-C₁₈ Cycloalkoxy oder C₆-C₁₈ Aryloxy darstellen, und
   - R³: Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest mit nachfolgenden Strukturen bedeutet 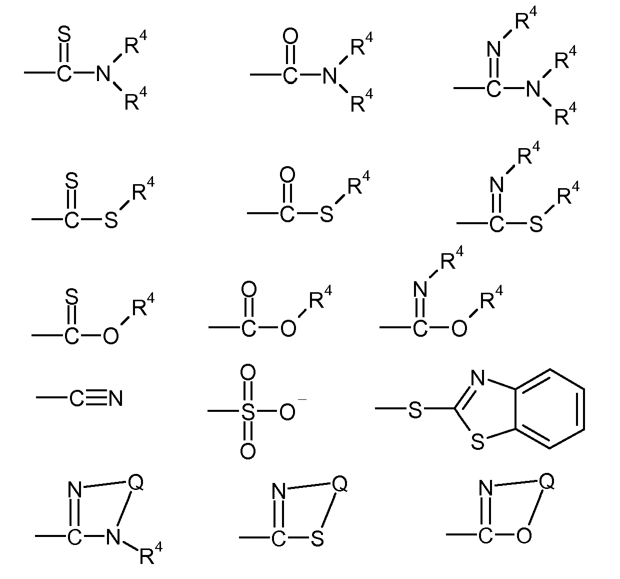 worin R⁴ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht,
   - und:
e) mindestens eine Polythiophosphorverbindung der allgemeinen Formel (III) oder (IV) 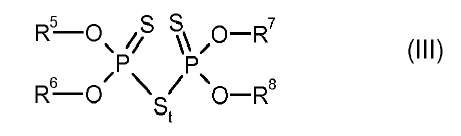 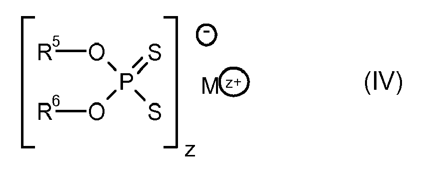 worin
   - R⁵, R⁶, R⁷ und R⁸: gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
   - t: für eine ganze Zahl von 1 bis 8, bevorzugt 3 bis 6 steht,
   - z: für eine ganze Zahl von 1 bis 3, bevorzugt 1 bis 2 steht, und
   - M^{z+}: ein Metallkation mit der Ladung z+ bedeutet, mit z+ gleich 1 bis 3, bevorzugt 1 oder 2, bevorzugt Li⁺, Na⁺, K⁺, Rb⁺, Cs⁺, Be²⁺, Mg²⁺, Ca²⁺, Sr²⁺, Ba²⁺, Al³⁺, Nd²⁺, Zn²⁺, Cd²⁺, Ni²⁺ oder Cu²⁺.

### Bevorzugt ist außerdem eine Kautschukmischung enthaltend

a) mindestens einen Kautschuk ausgewählt aus der Gruppe bestehend aus NR (Naturkautschuk), SBR (Vinylaromat/Dien-Kautschuke), BR (Polybutadienkautschuk), IR (Polyisopren), IBR (Isopren/Butadien-Kautschuk), IIR (Isobuten/Isopren-Kautschuk), BIR (Butadien/Isopren-Kautschuk), SIBR (Styrol/Isopren-Kautschuk) und Mischungen daraus,
b) mindestens ein hydroxylgruppenhaltiges Mikrogel ausgewählt aus der Gruppe bestehend aus Mikrogelen auf Basis der Monomere Butadien, Trimethylolpropantrimethacrylat und Hydroxyethylmethacrylat, Mikrogelen auf Basis der Monomere Butadien, Styrol, Trimethylolpropantrimethacrylat und Hydroxyethylmethacrylat und Mikrogelen auf Basis der Monomere Styrol, Trimethylolpropantrimethacrylat und Hydroxyethylmethacrylat, wobei diese Mikrogele besonders bevorzugt (i) eine Glastemperatur im Bereich von -78 °C bis 150 °C, insbesondere von -78 °C bis 125 °C, (ii) einen Quellungsindex von weniger als 30, insbesondere weniger als 25, ganz besonders bevorzugt weniger als 20 und (iii) einen Gehalt einpolymerisierter hydroxylhaltiger Monomerer von größer als 0,1 Gew.-% mit Hydroxylzahlen größer als 0,5 aufweisen,
c) Kieselsäure als heller Füllstoff,
d) mindestens einem Bis(triethoxysilylpropyl)polysulfan der folgenden Strukturformel (V) mit n= 2 oder 4 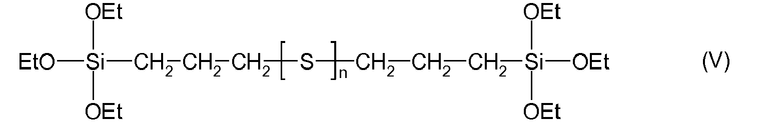
e) entweder 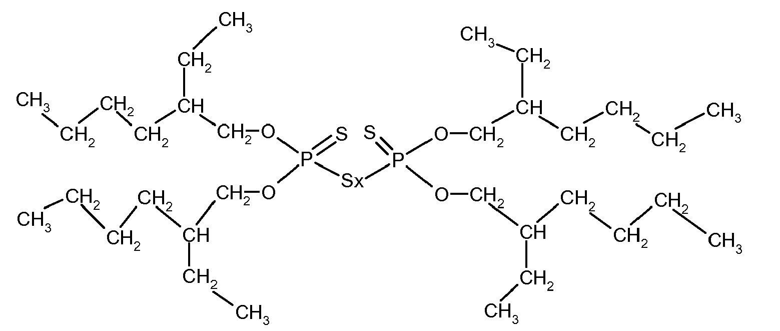 mit x=2 bis 4 oder 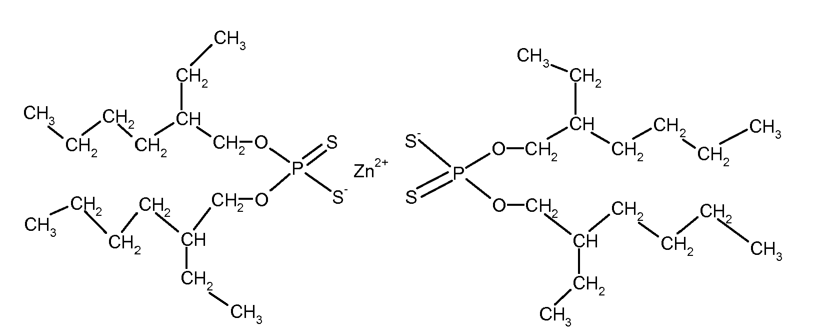 und f) Schwefel oder Schwefelspender.
   In einer typischen Ausführungsform handelt es sich um eine Kautschukmischung enthaltend
   a) mindestens einen Kautschuk,
   b) 1 bis 100 Gew.-Teile, vorzugsweise 2,5 bis 50 Gew.-Teile, besonders bevorzugt 3 bis 30 Gew.-Teile mindestens eines hydroxylgruppenhaltigen Mikrogels,
   c) 20 bis 200 Gew.-Teile, vorzugsweise 30 bis 150 Gew.-Teile, besonders bevorzugt 50 bis 130 Gew.-Teile mindestens eines hellen Füllstoffs,
   d) 0,2 bis 12 Gew.-Teile, vorzugsweise 1 bis 10 Gew.-Teile, besonders bevorzugt 2 bis 9 Gew.-Teilen mindestens eines polysulfidhaltigen Alkoxysilans,
   e) 1 bis 5 Gew.-Teile, vorzugsweise 1,5 bis 4,0 Gew.-Teile, besonders bevorzugt 1,8 bis 3,5 Gew.-Teile mindestens einer Polythiophosphorverbindung und
   f) optional 0,1 bis 50 Gew.-Teile, vorzugsweise 1,0 bis 40 Gew.-Teile, besonders bevorzugt 1,5 bis 30 Gew.-Teile eines oder mehrerer weiterer Kautschukadditive.
   wobei alle vorgenannten Gew.-Teil Angaben für die Komponenten b) bis f) jeweils auf 100 Gewichtsteile der Kautschukkomponente(n) a) bezogen sind.

### Herstellung der erfindungsgemäßen Kautschukmischung:

Die Herstellung der erfindungsgemäßen Kautschukmischung erfolgt durch Mischen der Komponenten a) bis e) und optional einer oder mehrerer Komponente(n) f). Das Mischen kann in einer oder mehreren Stufen erfolgen. Bewährt hat sich ein dreistufiger Mischprozess mit zwei Mischstufen im Innenmischer und einer abschließenden Mischstufe auf einer Walze (sogenannte "Fertigmischstufe"). Möglich ist auch ein zweistufiger Mischprozess, bei dem die 1. Mischstufe im Innenmischer und die 2. Mischstufe auf einer Walze erfolgt. Ebenso möglich ist ein zweistufiger Mischprozess, bei dem beide Mischstufen in einem Innenmischer erfolgen, wobei die Mischung vor der Zugabe derjenigen Komponenten, die ansonsten üblicherweise auf der Walze zugegeben werden, auf Temperaturen < 120°C, vorzugsweise <110°C abgekühlt wird.

Es hat sich bewährt, die Komponente c) in Form des hellen Füllstoffs vollständig im 1. Mischschritt und auch die Komponente b) in Form des hydroxylgruppenhaltigen Mikrogels vollständig im 1. Mischschritt oder aber aufgeteilt im 1. und 2. Mischschritt zuzusetzen. Das polysulfidhaltige Alkoxysilan kann ebenfalls entweder vollständig im ersten Mischschritt oder aber aufgeteilt im ersten und zweiten Mischschritt zugesetzt werden.

Geeignete Aggregate für die Mischungsherstellung sind an sich bekannt und schließen z.B. Walzen, Innenmischer oder auch Mischextruder ein.

Bei Anwendung eines zweistufigen Mischverfahrens im Innenmischer oder eines dreistufigen Mischverfahrens wie oben angegeben wird in der ersten und/oder in der zweiten, vorzugsweise in der ersten und zweiten Mischstufe bei Temperaturen von 110°C bis 180 °C, vorzugsweise 120°C bis 170°C, besonders bevorzugt 130°C bis 160°C gearbeitet, wobei die Mischzeiten bei diesen Temperaturen im Bereich von 1 bis 15 Minuten liegen und so gewählt werden, dass nicht bereits ein Vulkanisationsstart erfolgt. Die Temperaturen in der o.g. Fertigmischstufe betragen 20 bis 120°C, bevorzugt 50 bis 110 °C.

Üblicherweise erfolgt das Mischen im Innenmischer in einem Temperaturbereich von 20 bis 180°C, bevorzugt im Temperaturbereich 50 bis 160 °C oder auf einer Walze bei weniger als 100 °C. Die Wahl einer geeigneten Temperatur kann der Fachmann gemäß seiner Fachkenntnisse vornehmen, zu beachten ist, dass es beim Mischen einerseits zu einer Silanisierung der Kieselsäure und andrerseits nicht bereits zu einer verfrühten Vulkanisation kommt (Scorching).

### Verfahren zur Herstellung von Vulkanisaten:

Die Vulkanisation der erfindungsgemäßen Zusammensetzungen erfolgt üblicherweise bei einer Temperatur im Bereich von 100 bis 250°C, bevorzugt von 130 bis 180°C, entweder unter Normaldruck (1 bar) oder optional unter einem Druck von bis zu 100 bar. Typischerweise erfolgt diese Vulkanisation im Rahmen eines Formgebungsverfahrens.

Die erfindungsgemäß hergestellten Zusammensetzungen eignen sich zur Herstellung verschiedener Reifenbauteile, insbesondere für Reifenlaufflächen, Subtreads, Karkassen, Seitenwänden, verstärkten Seitenwänden für Notlaufreifen und Apexmischungen sowie auch für die Herstellung von technischen Gummiartikeln wie Dämpfungselementen, Walzenbelägen, Belägen von Förderbändern, Riemen, Spinnkopsen, Dichtungen, Golfballkernen und Schuhsohlen. Besonders geeignet sind die Mischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen sowie Reifen für Rennwagen, Motorrad und Fahrrad ein.

### BEISPIELE:

Die erfindungsgemäßen Beispiele wurden mit den beiden folgenden Polythiophosphorverbindungen durchgeführt:
- **Versuchsserie 1:**: Zink-bis(O,O-2-Ethylhexyl)dithiophosphat
(gebunden an 30 Gew.-% hochaktive Kieselsäure und 20 Gew.-% Polymerbinder als Rhenocure® ZDT, RheinChemie Rheinau GmbH) 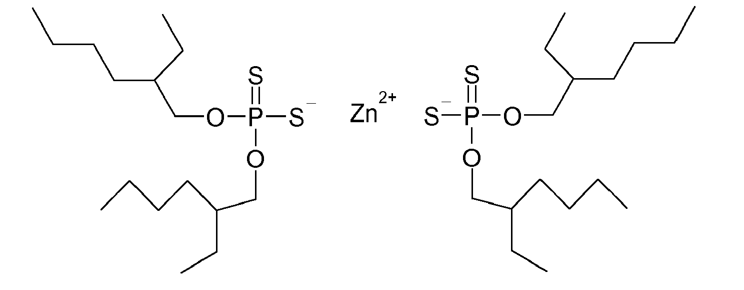
- **Versuchsserie 2:**: Bis(O,O-2-Ethylhexyldithiophosphoryl)polysulfid
(gebunden an 30 Gew.-% hochaktive Kieselsäure als Rhenocure® SDT, RheinChemie Rheinau GmbH)

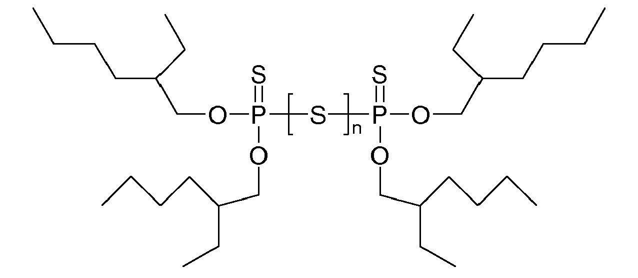

In beiden **Versuchsserien** wurde die Wirkung hydroxylgruppenhaltiger Mikrogele in Kautschukmischungen geprüft, in denen Diphenylguanidin (DPG) vollständig durch eine erfindungsgemäße Komponente e) ersetzt wurde (Versuchsserie 1: Rhenocure® ZDT; Versuchsserie 2: Rhenocure® SDT). Als Vergleichsversuche wurden a) jeweils eine DPG-haltige Mischung ohne Rhenocure® ZDT bzw. ohne Rhenocure® SDT und ohne hydroxylgruppenhaltiges Mikrogel sowie b) mehrere DPG-freie Mischungen ohne hydroxylgruppenhaltiges Mikrogel mit unterschiedlichen Dosierungen an Rhenocure® ZDT bzw. Rhenocure® SDT geprüft.

### Herstellung der Mischungen:

In den zwei Versuchserien wurden die Kautschukmischungen jeweils in einem 3stufigen Mischverfahren hergestellt, wobei für die 1. und 2. Mischstufe jeweils ein Innenmischer mit 1,5 l Innenvolumen (GK 1,5 der Firma Werner & Pfleiderer, Stuttgart mit ineinandergreifenden Knetelementen (PS 5A -Schaufelgeometrie) eingesetzt wurde.

Die eingesetzten Komponenten sind bei den einzelnen Versuchsserien in Tabelle 1.1. und 2.1. aufgelistet. Bei allen Angaben handelt es sich um Gew.-Teile bezogen auf 100 Gew.-Teile Kautschuk. Bei der Mischungsherstellung wurde ölverstreckter Lösungs-SBR (110 Gew.-Teile) in einer solchen Menge eingesetzt, dass die Menge des darin enthaltenen ölfreien Lösungs-SBR (80 Gew.-Teile) zusammen mit dem (ölfreien) Polybutadien (20 Gew.-Teile) in Summe 100 Gew.-Teile Kautschuk ergibt. Die in den Tabellen angegebene Reihenfolge der Mischungsbestandteile entspricht der Reihenfolge der Zugabe in den Innenmischer. In den Tabellen sind außerdem die Zeitpunkte für die Zugabe der verschiedenen Komponenten aufgeführt. Nach Zugabe der letzten Komponente (Zinkoxid) wurde der Innenmischer auf 150°C aufgeheizt und 6 min. bei dieser Temperatur gehalten. Danach wurden die Mischungen ausgeworfen und zur Beschleunigung der Abkühlung auf Temperaturen <100°C kurz auf einer Walze behandelt.

Nach 24 stündiger Lagerung bei 23°C wurden die Mischungen in einem Innenmischer ohne Zugabe von Mischungskomponenten bei 150°C/6 min. redispergiert ("nicht produktive" 2. Mischstufe), ausgeworfen und auf einer auf 40°C vorgewärmten Walze abgekühlt. Die Zugabe der in den nachfolgenden Tabellen genannten Mischungsbestandteile erfolgte nach Abkühlung der Kautschukmischungen auf Temperaturen <90°C auf einer Walze ohne vorhergehende Zwischenlagerung.

An den unvulkanisierten Kautschukmischungen wurden nach ***ASTM D1646*** die Mooney-Viskosität nach 1 min. (ML1+1/100°C) und nach 4 min. (ML1+4/100°C) sowie die Mooney Relaxation nach 10 und 30 sec bestimmt.

Das **Vulkanisationsverhalten** der Mischungen wurde im Rheometer bei 160°C nach ***DIN 53 529*** mit Hilfe des Monsantorheometers MDR 2000E untersucht. Auf diese Weise wurden charakteristische Daten wie Fₘᵢₙ, Fₘₐₓ, F_{max.}-Fₘᵢₙ, t₁₀, t₅₀, t₉₀ und t₉₅ bestimmt.

Nach DIN 53 529, Teil 3 bedeuten:
- Fₘᵢₙ:: Vulkameteranzeige im Minimum der Vernetzungsisotherme
- Fₘₐₓ:: Vulkameteranzeige im Maximum der Vernetzungsisotherme
- Fₘₐₓ - Fₘᵢₙ:: Differenz der Vulkameteranzeigen zwischen Maximum und Minimum
- t₁₀:: Zeit, bei der 10% des Umsatzes erreicht sind
- t₅₀:: Zeit, bei der 50% des Umsatzes erreicht sind
- t₉₀:: Zeit, bei der 90% des Umsatzes erreicht sind
- t₉₅:: Zeit, bei der 95% des Umsatzes erreicht sind

Die für die Vulkanisatcharakterisierung notwendigen **Prüfkörper** wurden durch Pressenvulkanisation der Mischungen bei einem Hydraulikdruck von 120 bar hergestellt. Die für die Herstellung der Prüfkörper verwendeten Vulkanisationsbedingungen sind bei den einzelnen Versuchsserien angegeben.

**An den Vulkanisaten wurden folgende Eigenschaften nach den genannten Normen bestimmt:**
- DIN 53505:: Shore A-Härte bei 23°C und 70°C
- DIN 53512:: Rückprallelastizität bei 23°C und 70°C ("R23")
- DIN 53504:: Spannungswerte bei 10%, 25%, 50%, 100%, 200% und 300 % Dehnung (σ₁₀, σ₂₅, σ₅₀, σ ₁₀₀, σ₂₀₀ und σ₃₀₀), Zugfestigkeit sowie Bruchdehnung
- DIN 53516:: Abrieb

Im **Goodrich-Flexometer** (DIN 53533) wurden die Temperaturerhöhung sowie die bleibende Verformung bestimmt. Die Messungen wurden bei 100°C, einer Vorspannung von 1,0 MPa, einem von Hub von 4,00 mm und einer Beanspruchungszeit von 25 min. durchgeführt

Die dynamischen Eigenschaften wurden mit einem Eplexor-Gerät (Eplexor 500 N) der Firma Gabo-Testanlagen GmbH, Ahlden, Deutschland nach DIN53513 bei 10Hz an Zylinderproben im Temperaturbereich -100°C und +100°C bei einer Heizrate von 1K/min. ermittelt. Die Messungen erfolgten im Kompressionsmodus bei einer statischen Kompression von 1% und einer dynamischen Verformung von 0,1%.

Mit der Methode wurden folgende Messgrößen ermittelt, die nach ASTM 5992-96 bezeichnet wurden:
- E':: Speichermodul
- E":: Verlustmodul
- tan δ:: Verlustfaktor (E"/E')

### 1. Versuchsserie (mit Rhenocure® ZDT)

In **Vergleichsbeispiel 1.1** wurde 2,3 phr DPG eingesetzt. In den **Vergleichsbeispielen 1.2,1.3,1.4,1.5 und 1.6** wurde DPG quantitativ durch unterschiedliche Mengen an Rhenocure® ZDT (70%ig) ersetzt. Die **erfindungsgemäßen Beispiele 1.7*, 1.8* und 1.9*** enthielten jeweils 2,6 phr Rhenocure® ZDT und 20 phr hydroxylmodifizierte Mikrogele.

**Tabelle 1.1: 1. Mischstufe**

| | **Compound Nr.** | **1.1** | **1.2** | **1.3** | **1,4** | **1.5** | **1.6** | **1.7*** | **1.8*** | **1.9*** |
|---|---|---|---|---|---|---|---|---|---|---|
| **Zugabezeitpunkt: 0 sec.** | | | | | | | | | | |
| Komponente a) | **Lösungs-SBR¹⁾** | 110 | 110 | 110 | 110 | 110 | 110 | 110 | 110 | 110 |
| Komponente a) | **Polybutadien ²⁾** | 20 | 20 | 20 | 20 | 20 | 20 | 20 | 20 | 20 |

| Zugabezeitpunkt: 30 sec. | | | | | | | | | | |
|---|---|---|---|---|---|---|---|---|---|---|
| Komponente c) | **Kieselsäure ³⁾** | 53 | 53 | 53 | 53 | 53 | 53 | 53 | 53 | 53 |
| Komponente b) | **Mikrogel ⁴⁾** | - | - | - | - | - | - | **20** | - | **10** |
| Komponente b) | **Mikrogele ⁵⁾** | - | - | - | - | - | - | - | **20** | **10** |
| Komponente d) | **Bis(tri-ethoxy-silylpropylmonosulfan) ⁶⁾** | 6,4 | 6,4 | 6,4 | 6,4 | 6,4 | 6,4 | 6,4 | 6,4 | 6,4 |
| | **DPG ⁷⁾** | **2,3** | - | - | - | - | - | - | - | - |
| Vulkanisationsbeschleuniger | **Zink-bis(O,O-2-Ethylhexyl)dithiophosphat ⁸⁾** | - | **2,0** | **2,3** | **2,6** | **2,9** | **3,3** | **2,6** | **2,6** | **2,6** |
| Komponente e) | **Bis(O,O-2-Ethylhexyldithio-phosphoryl)polysulfid ⁹⁾** | - | - | - | - | - | - | - | - | - |
| Komponente f) | **TMQ ¹⁰⁾** | 1 | 1 | 1 | 1 | 1 | 1 | 1 | 1 | 1 |
| Komponente f) | **6 PPD ¹¹⁾** | 1 | 1 | 1 | 1 | 1 | 1 | 1 | 1 | 1 |
| Komponente f) | **Stearinsäure ¹²⁾** | 1 | 1 | 1 | 1 | 1 | 1 | 1 | 1 | 1 |

| Zugabezeitpunkt: 90 sec. | | | | | | | | | | |
|---|---|---|---|---|---|---|---|---|---|---|
| Komponente c) | **Kieselsäure ³⁾** | 27 | 27 | 27 | 27 | 27 | 27 | 27 | 27 | 27 |
| Komponente c) | **Ruß ¹³⁾** | 5 | 5 | 5 | 5 | 5 | 5 | 5 | 5 | 5 |
| Komponente f) | **Mineralöl ¹⁴⁾** | 7,5 | 7,5 | 7,5 | 7,5 | 7,5 | 7,5 | 7,5 | 7,5 | 7,5 |
| Komponente f) | **Ozonschutzwachs ¹⁵⁾** | 1,4 | 1,4 | 1,4 | 1,4 | 1,4 | 1,4 | 1,4 | 1,4 | 1,4 |

| Zugabezeitpunkt: 150 sec. | | | | | | | | | | |
|---|---|---|---|---|---|---|---|---|---|---|
| Komponente f) | **Zinkoxid ¹⁶⁾** | 2,5 | 2,5 | 2,5 | 2,5 | 2,5 | 2,5 | 2,5 | 2,5 | 2,5 |
| | Maximale Temperatur [°C] | 150 | 150 | 150 | 150 | 150 | 150 | 150 | 150 | 150 |
| | Zeit bei max. Temperatur [min.] | 6 | 6 | 6 | 6 | 6 | 6 | 6 | 6 | 6 |

| | | | | | | | | | | |
|---|---|---|---|---|---|---|---|---|---|---|
| 1) Buna^{®} VSL 5025-1 HM Lösungs-SBR mit 37.5 phr Mineralöl verstreckt; Lanxess Deutschland GmbH 2) Buna^{®} CB 25 Neodym-Polybutadien; Lanxess Deutschland GmbH 3) Ultrasil^{®} VN3 GR Kieselsäure; Evonik Industries 4) Nanoprene^{®} B M15OH VP hydroxylgruppenhaltiges Mikrogel mit T_{g} = -15°C;Lanxess Deutschland GmbH 5) Nanoprene^{®} B M75OH VPhydroxylgruppenhaltiges Mikrogel mit Tg = -75°C;Lanxess DeutschlandGmbH 6) Si 75^{®} Bis(tri-ethoxy-silylpropyl-monosulfan); Evonik Industries 7) Vulkacit^{®} D Diphenylguanidin; Lanxess Dutschland GmbH 8) Rhenocure^{®} ZDT/S RheinChemie Rheinau GmbH (70%ig) 9) Rhenocure^{®} SDT/S RheinChemie Rheinau GmbH (70%ig) 10) 2,2,4-Trimethyl-1,2-dihydrochinonlin, polymerisiert:Vulkanox^{®} HS/LG; Lanxess Deutschland GmbH 11)N-1,3-Dimethylbutyl-N'-phenyl-p-phenylendiamin: Vulkanox^{®} 4020/LG; Lanxess Deutschland GmbH 12) Edenor^{®} C 18 98-100 Cognis Deutschland GmbH 13) Corax^{®}N 234Degussa-Evonik GmbH 14) Tudalen^{®} 1849-1 Hansen & Rosenthal KG 15) Antilux^{®} 654Ozonschutzwachs; Rhein Chemie Rheinau GmbH 16) Zinkweiss Rotsiegel®Grillo Zinkoxid GmbH | | | | | | | | | | |

Die Zugabe der in **Tabelle 1.2** genannten Mischungsbestandteile erfolgte im Anschluss an die 2. Mischstufe nach Abkühlung der Kautschukmischungen auf Temperaturen <90°C auf einer Walze ohne vorhergehende Zwischenlagerung.

**Tabelle 1.2: Abschließende Mischstufe (Walze)**

| | **Compound Nr.** | **1.1** | **1.2** | **1.3** | **1.4** | **1.5** | **1.6** | **1.7*** | **1.8*** | **1.9*** |
|---|---|---|---|---|---|---|---|---|---|---|
| Komponente c) | **Schwefel ¹⁷⁾** | 1,9 | 1,9 | 1,9 | 1,9 | 1,9 | 1,9 | 1,9 | 1,9 | 1,9 |
| Komponente d) | **CBS ¹⁸⁾** | 1,9 | 1,9 | 1,9 | 1,9 | 1,9 | 1,9 | 1,9 | 1,9 | 1,9 |

| | | | | | | | | | | |
|---|---|---|---|---|---|---|---|---|---|---|
| 17) Löslicher Schwefel Mahlschwefe 190/95° Chance^{®}; Solvay Barium Strontium 18) N-Cyclohexyl-2-benzthiazylsulfenamid:Vulkacit® CZ/C; Lanxess Deutschland GmbH | | | | | | | | | | |

**Tabelle 1.3: Mischungseigenschaften (alle bestimmt nach ASTM 1646)**

| **Compound Nr.** | **1.1** | **1.2** | **1.3** | **1.4** | **1.5** | **1.6** | **1.7*** | **1.8*** | **1.9*** |
|---|---|---|---|---|---|---|---|---|---|
| ML 1+1/100°C [ME] | 106,5 | 92,0 | 94,5 | 94,3 | 96,8 | 115 | 104,8 | 106,3 | 104,0 |
| ML 1+4/100°C [ME] | 89,8 | 81,6 | 83,0 | 83,9 | 85,5 | 94 | 95,0 | 96,5 | 95,0 |
| Mooney Relaxation /10 sec. [%] | 29,7 | 27,5 | 28,2 | 28,7 | 29,7 | 33,0 | 28,9 | 28,9 | 28,2 |
| Mooney Relaxation /30 sec. [%] | 21,6 | 20,8 | 21,5 | 22,0 | 22,9 | 26,2 | 22,2 | 22,2 | 21,3 |

Die **erfindungsgemäßen Mischungen 1.7*, 1.8* und 1.9*** weisen im Vergleich mit den **Vergleichsmischungen 1.1 - 1.6** vergleichbare Mooneyviskositäten ML1+1 (100°C) und ML1+4 (100°C) sowie ein vergleichbares Relaxationsverhalten (nach 10 und 30 sec.) auf. Dies sind Hinweise dafür, dass das Verarbeitungsverhalten der erfindungsgemäßen Mischungen genauso gut wie bei den im Stand der Technik beschriebenen mikrogelfreien Mischungen ist.

**Tabelle 1.4: Vulkameterprüfung**

| **Compound Nr.** | **1.1** | **1.2** | **1.3** | **1.4** | **1.5** | **1.6** | **1.7*** | **1.8*** | **1.9*** |
|---|---|---|---|---|---|---|---|---|---|
| **Fₘᵢₙ. [dNm]** | 3,25 | 3,21 | 3,28 | 3,25 | 3,37 | 3,86 | 4,41 | 4,57 | 4,37 |
| **Fₘₐₓ [dNm]** | 17,31 | 20,99 | 21,24 | 21,94 | 21,42 | 22,31 | 19,85 | 20,27 | 20,17 |
| **Fₘₐₓ - Fₘᵢₙ [dNm]** | 14,05 | 17,78 | 17,96 | 18,69 | 18,05 | 18,45 | 15,44 | 15,70 | 15,80 |
| **t₁₀ [sec]** | 112 | 183 | 183 | 178 | 191 | 207 | 240 | 217 | 230 |
| **t₅₀ [sec]** | 204 | 394 | 388 | 383 | 371 | 377 | 422 | 428 | 442 |
| **t₉₀ [sec]** | 730 | 732 | 717 | 713 | 680 | 701 | 750 | 770 | 797 |
| **t₉₅ [sec]** | 1073 | 993 | 983 | 980 | 933 | 962 | 750 | 770 | 797 |
| **t₉₀-t₁₀ [sec]** | 618 | 549 | 534 | 535 | 489 | 494 | 510 | 553 | 567 |

Die **erfindungsgemäßen Mischungen 1.7*, 1.8* und 1.9*** weisen im Vergleich mit den **Vergleichsmischungen 1.1 - 1.6** bei vergleichbarem Vernetzungsgrad (Fₘₐₓ - Fₐ) signifikant längere Anvulkanisationszeiten (t₁₀) auf, d.h. sie verfügen über eine deutlich verbesserte Verarbeitungssicherheit bei vergleichbaren Vulkanisationsgeschwindigkeiten (t₉₀-t₁₀).

**Tabelle 1.5: Vulkanisationsbedingungen**

| **Compound Nr.** | **1.1** | **1.2** | **1.3** | **1.4** | **1.5** | **1.6** | **1.7*** | **1.8*** | **1.9*** |
|---|---|---|---|---|---|---|---|---|---|
| Vulkanisationstemperatur [°C] | 160 | 160 | 160 | 160 | 160 | 160 | 160 | 160 | 160 |
| Vulkanisationszeit [min.] | 31 | 21 | 33 | 33 | 33 | 31 | 33 | 33 | 33 |

Die Vulkanisateigenschaften der **erfindungsgemäßen Mischungen 1.7*, 1.8* und 1.9*** und der **Vergleichsmischungen 1.1 - 1.6** sind in der folgenden **Tabelle 1.6** zusammengefasst.

**Tabelle 1.6: Vulkanisateigenschaften**

| **Compound Nr.** | **1.1** | **1.2** | **1.3** | **1.4** | **1.5** | **1.6** | **1.7*** | **1.8*** | **1.9*** |
|---|---|---|---|---|---|---|---|---|---|
| Shore A-Härte bei 23°C ("ShA23") | 61,4 | 64,4 | 64,1 | 65,0 | 65,0 | 66,7 | 64,2 | 64,7 | 64,1 |
| Shore A Härte bei 70°C ("ShA70") | 57,7 | 63,0 | 63,0 | 64,0 | 63,5 | 64,5 | 63,0 | 63,0 | 63,0 |
| Rückprallelastizität/23°C ("R23") [%] | 27,5 | 29 | 30 | 30 | 30 | 27 | 26 | 36,5 | 30,5 |
| Rückprallelastizität/70°C ("R70") [%] | 61,5 | 60,6 | 61,3 | 61,3 | 62,6 | 62 | 63,1 | 64,1 | 64,1 |
| σ₁₀ [MPa] | 0,5 | 0,6 | 0,6 | 0,6 | 0,6 | 0,6 | 0,5 | 0,5 | 0,5 |
| σ₂₅ [MPa] | 0,9 | 1,0 | 1,0 | 1,0 | 1,0 | 1,1 | 1,0 | 1,0 | 1,0 |
| σ₅₀ [MPa] | 1,4 | 1,5 | 1,6 | 1,5 | 1,5 | 1,7 | 1,5 | 1,6 | 1,6 |
| σ₁₀₀ [MPa] | 2,6 | 2,7 | 3,0 | 2,9 | 3,0 | 3,7 | 3,2 | 3,3 | 3,2 |
| σ₂₀₀ [MPa] | 6,9 | 7,7 | 8,4 | 8,5 | 9,3 | 10,9 | 10,3 | 10,0 | 10,1 |
| σ₃₀₀ [MPa] | 13,0 | 14,9 | 16,0 | 16,5 | 18,1 | 20,0 | 18,9 | 18,3 | - |
| σ₂₀₀/σ₂₅ | 7,7 | 7,7 | 8,4 | 8,5 | 9,3 | 9,9 | 10,3 | 10,0 | 10,1 |
| Zugfestigkeit [MPa] | 19,8 | 20,3 | 19,9 | 18,3 | 19,8 | 19,5 | 19,2 | 17,2 | 15,8 |
| Bruchdehnung [%] | 399 | 369 | 351 | 322 | 319 | 292 | 303 | 287 | 275 |
| σ₂₀₀/σ₂₅ * Bruchdehnung / Zugfestigkeit | | | | | | | | | |
| [% / MPa] | 155 | 140 | 148 | 150 | 150 | 148 | 163 | 167 | 176 |
| Abrieb [mm³] | 96 | 88 | 86 | 84 | 84 | 87 | 76 | 76 | 76 |

Die **erfindungsgemäßen Mischungen 1.7*, 1.8*** und **1.9*** weisen verglichen mit den **Vergleichsmischungen 1.1-1.6** ein Modulniveau auf, das dem der besten **Vergleichsbeispiele 1.5** und **1.6** entspricht. Das Verstärkungsverhalten (σ₂₀₀ /σ₂₅) und der Abrieb sind bei den **erfindungsgemäßen Beispielen 1.7*, 1.8* und 1.9*** am besten. Wenn man das Verstärkungsverhalten mit der Bruchdehnung multipliziert und durch die Zugfestigkeit dividiert, erhält man ein Maß für den Materialwiderstand gegen Bruch, der mit dem verbesserten Verstärkungsverhalten der erfindungsgemäßen Beispiele korreliert. Dies wird bei einem Vergleich der **Compounds 1.7*, 1.8*** und **1.9*** mit **1.4** in der vorletzten Zeile der **Tabelle 1.6** deutlich. Ein günstiges Verstärkungsverhalten (σ₂₀₀/σ₂₅) ist ein Hinweis auf eine gute Kieselsäuredispersion und somit auf eine günstige Naßrutschfestigkeit /Rollwiderstand-Relation sowie auf einen hohen Abriebwiderstand von Laufflächenmischungen.

**Tabelle 1.7: Goodrich-Flexometer**

| **Compound Nr.** | **1.1** | **1.2** | **1.3** | **1.4** | **1.5** | **1.6** | **1.7*** | **1.8*** | **1.9*** |
|---|---|---|---|---|---|---|---|---|---|
| Temperaturerhöhung [°C] | 16,4 | 15,0 | 14,6 | 14,2 | 14,6 | 14,4 | 14,0 | 14,5 | 13,7 |
| Bleibende Verformung [%] | 4,0 | 2,0 | 2,0 | 2,0 | 2,0 | 1,1 | 1,6 | 2,0 | 1,6 |

Bei dynamischer Beanspruchung im Goodrich-Flexometer weisen die **erfindungsgemäßen Mischungen 1.7*, 1.8* und 1.9*** eine niedrige Temperaturerhöhung sowie eine niedrige bleibende Verformung auf, die genauso gut wie bei den besten der **Vergleichsbeispiele (1.4 und 1.6)** ist.

**Tabelle 1.8: Dynamische Eigenschaften / Eplexor-Test( Heizrate 1K/min)**

| **Compound Nr.** | **1.1** | **1.2** | **1.3** | **1.4** | **1.5** | **1.6** | **1.7*** | **1.8*** | **1.9*** |
|---|---|---|---|---|---|---|---|---|---|
| E' (0°C) / 10 Hz [MPa] | 40,86 | 44,81 | 38,56 | 39,20 | 34,62 | 33,04 | 46,27 | 21,02 | 34,25 |
| E"(0°C) / 10 Hz [MPa] | 18,99 | 16,44 | 15,28 | 15,34 | 14,52 | 15,96 | 21,25 | 8,34 | 13,92 |
| tan δ (0°C) / 10 Hz | 0,465 | 0,367 | 0,396 | 0,391 | 0,419 | 0,482 | 0,459 | 0,396 | 0,407 |
| E' (60°C) / 10 Hz [MPa] | 8,78 | 12,73 | 11,11 | 11,29 | 9,86 | 8,0 | 7,44 | 7,33 | 8,32 |
| E"(60°C) / 10 Hz [MPa] | 1,04 | 1,28 | 1,05 | 1,06 | 0,89 | 0,68 | 0,64 | 0,54 | 0,69 |
| tan δ (60°C) / 10 Hz | 0,118 | 0,101 | 0,095 | 0,093 | 0,09 | 0,084 | 0,085 | 0,074 | 0,083 |
| tan δ (0°C) - tan δ (60°C) | 0,347 | 0,267 | 0,301 | 0,298 | 0,329 | 0,398 | 0,374 | 0,322 | 0,324 |

Bei dynamischer Beanspruchung im Eplexor-Test weisen die **erfindungsgemäßen Mischungen 1.7*, 1.8* und 1.9*** bei 0°C und bei 60°C tan δ -Werte auf, die vergleichbar mit denen der **Vergleichsbeispiele 1.1 - 1.6** sind. Bei gleicher Dosierung an Rhenocure® ZDT (Vergleich mit **Vergleichsbeispiel 1.4)** weisen die **erfindungsgemäßen** Beispiele **1.7*, 1.8*** und **1.9*** einen höheren tan δ-Wert bei 0°C, einen niedrigeren tan δ-Wer bei 60°C sowie eine höhere Differenz der tan δ-Werte bei 60°C und 0°C auf. Ein hoher tan 8-Wert bei 0°C ist ein Hinweis auf gute Nassrutschfestigkeit. Ein niedriger tan δ-Wer bei 60°C ist ein Hinweis auf niedrigen Rollwiderstand und eine hohe Differenz der tan δ-Werte bei 60°C und 0°C ist ein Hinweis auf eine gute Naßrutschfestigkeits/Rollwiderstands-Relation.

### 2. Versuchsserie (mit Rhenocure® SDT)

In **Vergleichsbeispiel 2.1** wurde 2,3 phr DPG eingesetzt. In den **Vergleichsbeispielen 2.2 -2.6** wurde DPG quantitativ durch 2,0, 2,3, 2,6, 2,9 und 3,3 phr Rhenocure® SDT (70%ig) ersetzt. Die **erfindungsgemäßen Beispiele 2.7*, 2.8* und 2.9*** enthielten jeweils 2,6 phr Rhenocure SDT und 20 phr hydroxylmodifiziertes Mikrogel.

**Tabelle 2.1: 1. Mischstufe**

| | **Compound Nr.** | **2.1** | **2.2** | **2.3** | **2.4** | **2.5** | **2.6** | **2.7*** | **2.8*** | **2.9*** |
|---|---|---|---|---|---|---|---|---|---|---|
| **Zugabezeitpunkt: 0 sec.** | | | | | | | | | | |
| Komponente a) | **Lösungs-SBR ¹⁾** | 110 | 110 | 110 | 110 | 110 | 110 | 110 | 110 | 110 |
| Komponente a) | **Polybutadien ²⁾** | 20 | 20 | 20 | 20 | 20 | 20 | 20 | 20 | 20 |

| **Zugabezeitpunkt: 30 sec.** | | | | | | | | | | |
|---|---|---|---|---|---|---|---|---|---|---|
| Komponente c) | **Kieselsäure ³⁾** | 53 | 53 | 53 | 53 | 53 | 53 | 53 | 53 | 53 |
| Komponente b) | **Mikrogel ⁴⁾** | - | - | - | - | - | - | **20** | - | **10** |
| Komponente b) | **Mikrogel ⁵⁾** | - | - | - | - | - | - | - | **20** | **10** |
| Komponente d) | **Bis(tri-ethoxy-silylpropylmonosulfan) ⁶⁾** | 6,4 | 6,4 | 6,4 | 6,4 | 6,4 | 6,4 | 6,4 | 6,4 | 6,4 |
| | **DPG ⁷⁾** | **2,3** | - | - | - | - | - | - | - | - |
| Vulkanisationsbeschleuniger | **Zink-bis(O,O-2-Ethylhexyl)dithiophosphat ⁸⁾** | - | - | - | - | - | - | - | - | - |
| Komponente e) | **Bis(O,O-2-Ethylhexyldithiophosphoryl)polysulfid ⁹⁾** | **-** | **2,0** | **2,3** | **2,6** | **2,9** | **2,6** | **2,6** | **2,6** | **2,6** |
| Komponente f) | **TMQ ¹⁰⁾** | 1 | 1 | 1 | 1 | 1 | 1 | 1 | 1 | 1 |
| Komponente f) | **6 PPD ¹¹⁾** | 1 | 1 | 1 | 1 | 1 | 1 | 1 | 1 | 1 |
| Komponente f) | **Stearinsäure ¹²⁾** | 1 | 1 | 1 | 1 | 1 | 1 | 1 | 1 | 1 |

| **Zugabezeitpunkt: 90 sec.** | | | | | | | | | | |
|---|---|---|---|---|---|---|---|---|---|---|
| Komponente c) | **Kieselsäure ³⁾** | 27 | 27 | 27 | 27 | 27 | 27 | 27 | 27 | 27 |
| | **Ruß ¹³⁾** | 5 | 5 | 5 | 5 | 5 | 5 | 5 | 5 | 5 |
| Komponente f) | **Mineralöl ¹⁴)** | 7,5 | 7,5 | 7,5 | 7,5 | 7,5 | 7,5 | 7,5 | 7,5 | 7,5 |
| Komponente f) | **Ozonwachs ¹⁵⁾** | 1,4 | 1,4 | 1,4 | 1,4 | 1,4 | 1,4 | 1,4 | 1,4 | 1,4 |

| **Zugabezeitpunkt: 150 sec.** | | | | | | | | | | |
|---|---|---|---|---|---|---|---|---|---|---|
| Komponente f) | **Zinkoxid ¹⁶⁾** | 2,5 | 2,5 | 2,5 | 2,5 | 2,5 | 2,5 | 2,5 | 2,5 | 2,5 |
| | Maximale Temperatur [°C] | 150 | 150 | 150 | 150 | 150 | 150 | 150 | 150 | 150 |
| | Zeit bei max. Temperatur [min.] | 6 | 6 | 6 | 6 | 6 | 6 | 6 | 6 | 6 |

| | | | | | | | | | | |
|---|---|---|---|---|---|---|---|---|---|---|
| 1) Buna^{®} VSL 5025-1 HM Lösungs-SBR mit 37,5 phr Mineralöl verstreckt; Lanxess Deutschland GmbH 2) Buna^{®} CB 25 Neodym-Polybutadien; Lanxess Deutschland GmbH 3) Ultrasil^{®} VN3 GR Kieselsäure; Evonik Industries 4) Nanoprene^{®} B M15OH VP hydroxylgruppenhaltiges Mikrogel mit Tg = -15 °C;Lanxess Deutschland GmbH 5) Nanoprene^{®} B M75OH VP hydroxylgruppenhaltiges Mikrogel mit Tg = -75°C;Lanxess Deutschland GmbH 6) Si 75^{®} Evonik Industries 7) Vulkacit^{®} D Diphenylguanidin; Lanxess Deutschland GmbH 8) Rhenocure^{®} ZDT/S RheinChemie Rheinau GmbH (70%ig) 9) Rhenocure^{®} SDT/S RheinChemie Rheinau GmbH (70%ig) 10) Vulkanox^{®} HS/LG 2,2,4-Trimethyl-1,2-dihydrochinonlin, polymerisiert; Lanxess Deutschland GmbH 11) Vulkanox^{®} 4020/LG N-1,3-Dimethylbutyl-N'-phenyl-p-phenylendiamin; Lanxess Deutschland GmbH 12) Edenor^{®} C 18 98-100 Cognis Deutschland GmbH 13) Corax^{®} N 234 Russ; Degussa-Evonik GmbH 14) Tudalen^{®} 1849-1 Hansen & Rosenthal KG 15) Antilux^{®} 654 Ozonschutzwachs; RheinChemie Rheinau GmbH 16) Zinkweiss Rotsiegel Grillo Zinkoxid GmbH | | | | | | | | | | |

**Tabelle 2.2: Abschließende Mischstufe (Walze)**

| | **Compound Nr.** | **2.1** | **2.2** | **2.3** | **2.4** | **2.5** | **2.6** | **2.7*** | **2.8*** | **2.9*** |
|---|---|---|---|---|---|---|---|---|---|---|
| Komponente c) | **Schwefel ¹⁷⁾** | 1,9 | 1,9 | 1,9 | 1,9 | 1,9 | 1,9 | 1,9 | 1,9 | 1,9 |
| Komponente d) | **CBS ¹⁸⁾** | 1,9 | 1,9 | 1,9 | 1,9 | 1,9 | 1,9 | 1,9 | 1,9 | 1,9 |

| | | | | | | | | | | |
|---|---|---|---|---|---|---|---|---|---|---|
| 17) Löslicher Schwefel Mahlschwefe190/95° Chancel®;Solvay Barium Strontium 18) Vulkacit®CZ/C N-Cyclohexyl-2-benzthiazylsulfenamid;Lanxess Deutschland GmbH | | | | | | | | | | |

**Tabelle 2.3: Mischungseigenschaften (alle bestimmt nach ASTM 1646)**

| **Compound Nr.** | **2.1** | **2.2** | **2.3** | **2.4** | **2.5** | **2.6** | **2.7*** | **2.8*** | **2.9*** |
|---|---|---|---|---|---|---|---|---|---|
| ML 1+1/100°C [ME] | 106,5 | 105,4 | 105,3 | 101,7 | 103,9 | 141 | 105,6 | 109,3 | 108,3 |
| ML 1+4/100°C [ME] | 89,8 | 84,3 | 83,3 | 80,6 | 81,4 | 116 | 88,9 | 89,8 | 89,5 |
| Mooney Relaxation /10 sec. [%] | 29,7 | 29,4 | 29,1 | 28,2 | 28,9 | 41,9 | 27,1 | 28,3 | 27,8 |
| Mooney Relaxation /30 sec. [%] | 21,6 | 22,7 | 22,5 | 21,6 | 22,1 | 34,9 | 20,5 | 21,8 | 21,3 |

Die **erfindungsgemäßen Mischungen 2.7*, 2.8* und 2.9*** weisen im Vergleich mit den **Vergleichsmischungen 2.1 - 2.6** vergleichbare Mooneyviskositäten ML1+1(100°C) und ML1+4(100°C) sowie ein vergleichbares Relaxationsverhalten (nach 10 und 30 sec.) auf. Dies sind Hinweise dafür, dass das Verarbeitungsverhalten der erfindungsgemäßen Mischungen genauso gut wie bei den im Stand der Technik beschriebenen mikrogelfreien Mischungen ist.

**Tabelle 2.4: Vulkameterprüfung**

| **Compound Nr.** | **2,1** | **2.2** | **2.3** | **2.4** | **2.5** | **2.6** | **2.7*** | **2.8*** | **2.9*** |
|---|---|---|---|---|---|---|---|---|---|
| Fₘᵢₙ [dNm] | 3,25 | 3,32 | 3,40 | 3,27 | 3,37 | 4,42 | 4,55 | 4,96 | 4,43 |
| Fₘₐₓ [dNm] | 17,31 | 18,68 | 19,27 | 19,43 | 19,62 | 22,11 | 18,76 | 19,41 | 18,52 |
| Fₘₐₓ - Fₘᵢₙ [dNm] | 14,05 | 15,36 | 15,87 | 16,16 | 16,25 | 17,69 | 14,21 | 14,45 | 14,09 |
| t₁₀ [sec] | 112 | 195 | 187 | 185 | 183 | 178 | 230 | 204 | 203 |
| t₅₀ [sec] | 204 | 297 | 285 | 279 | 281 | 353 | 345 | 309 | 312 |
| t₉₀ [sec] | 730 | 601 | 555 | 531 | 577 | 671 | 605 | 544 | 551 |
| t₉₅ [sec] | 1073 | 871 | 799 | 768 | 825 | 937 | 820 | 749 | 756 |
| t₉₀-t₁₀ [sec] | 618 | 406 | 368 | 346 | 394 | 493 | 375 | 340 | 348 |

Die **erfindungsgemäßen Mischungen 2.7*, 2.8* und 2.9*** weisen im Vergleich mit den **Vergleichsmischungen 2.1 - 2.6** bei vergleichbarem Vernetzungsgrad (Fₘₐₓ - Fₐ) längere Anvulkanisationszeiten (t₁₀), d. h eine deutlich verbesserte Verarbeitungssicherheit bei vergleichbaren Vulkanisationsgeschwindigkeiten (t₉₀-t₁₀) auf.

Die für die Vulkanisat Charakterisierung notwendigen Prüfkörper wurden durch Pressenvulkanisation der Mischungen bei einem Hydraulikdruck von 120 bar erhalten. Die für die Herstellung der Prüfkörper angewandten Vulkanisationsbedingungen sind in **Tabelle 2.5** zusammengefasst.

**Tabelle 2.5: Vulkanisationsbedingungen**

| **Compound Nr.** | **2.1** | **2.2** | **2.3** | **2.4** | **2.5** | **2.6** | **2.7*** | **2.8*** | **2.9*** |
|---|---|---|---|---|---|---|---|---|---|
| Vulkanisationstemperatur [°C] | 160 | 160 | 160 | 160 | 160 | 160 | 160 | 160 | 160 |
| Vulkanisationszeit [min.] | 31 | 28 | 31 | 28 | 31 | 31 | 28 | 31 | 28 |

**Tabelle 2.6: Vulkanisateigenschaften**

| **Compound Nr.** | **2,1** | **2.2** | **2.3** | **2.4** | **2.5** | **2.6** | **2.7*** | **2.8*** | **2.9*** |
|---|---|---|---|---|---|---|---|---|---|
| Shore A-Härte bei 23°C ("ShA23") | 61,4 | 63,7 | 63,7 | 63,7 | 62,8 | 65,7 | 64,1 | 63,9 | 63,5 |
| Shore A Härte bei 70°C ("ShA70") | 57,7 | 61,7 | 61,2 | 61,5 | 62,2 | 64,1 | 61,7 | 62,0 | 61,3 |
| Rückprallelastizität/23°C ("R23") [%] | 27,5 | 28,5 | 28,0 | 29,0 | 29,0 | 28 | 24,0 | 32,0 | 29,0 |
| Rückprallelastizität/70°C ("R70") [%] | 61,5 | 64,0 | 64,5 | 64,5 | 65,5 | 64 | 65,2 | 66,5 | 65,7 |
| σ₁₀ [MPa] | 0,5 | 0,5 | 0,5 | 0,6 | 0,5 | 0,6 | 0,5 | 0,5 | 0,5 |
| σ₂₅ [MPa] | 0,9 | 0,9 | 1,0 | 1,0 | 1,0 | 1,1 | 0,9 | 0,9 | 0,9 |
| σ₅₀ [MPa] | 1,4 | 1,5 | 1,5 | 1,6 | 1,6 | 1,8 | 1,5 | 1,5 | 1,5 |
| σ₁₀₀ [MPa] | 2,6 | 3,0 | 3,1 | 3,2 | 3,1 | 3,8 | 3,2 | 3,3 | 3,2 |
| σ₂₀₀ [MPa] | 6,9 | 8,3 | 8,8 | 9,1 | 9,0 | 11,5 | 9,9 | 10,0 | 9,8 |
| σ₃₀₀ [MPa] | 13,0 | 15,9 | 16,6 | 17,2 | 17,0 | - | - | 18,2 | 17,8 |
| σ₂₀₀/σ₂₅ | 7,7 | 9,2 | 8,8 | 9,1 | 9,0 | 10,4 | 11,0 | 11,1 | 10,9 |
| Zugfestigkeit [MPa] | 19,8 | 19,7 | 19,0 | 19,9 | 18,0 | 17,0 | 15,6 | 17,9 | 18,2 |
| Bruchdehnung [%] | 399 | 355 | 331 | 334 | 309 | 255 | 270 | 295 | 304 |
| σ₂₀₀/σ₂₅ * Bruchdehnung/ Zugfestigkeit [%/MPa] | 155 | 166 | 153 | 153 | 155 | 156 | 190 | 183 | 182 |
| Abrieb [mm³] | 96 | 91 | 93 | 91 | 90 | 93 | 85 | 77 | 85 |

Die **erfindungsgemäßen Mischungen 2.7*, 2.8* und 2.9*** weisen im Vergleich mit den **Vergleichsmischungen 2.1 - 2.6** das günstigste Verstärkungsverhalten (σ₂₀₀/σ₂₅) auf. Wenn man das Verstärkungsverhalten mit der Bruchdehnung multipliziert und durch die Zugfestigkeit dividiert, erhält man ein Maß für den Materialwiderstand gegen Bruch, der bei den erfindungsgemäßen Beispielen mit der verbesserten Verstärkungswirkung korreliert. Dies wird im Vergleich der **Compounds 2.7*, 2.8* und 2.9* mit 2.4** in der vorletzten Zeile der **Tabelle 2.6** deutlich. Auch der DIN-Abrieb ist bei den **erfindungsgemäßen Beispielen 2.7*, 2.8* und 2.9*** am günstigsten. Dies wird besonders bei gleicher Dosierung von Rhenocure® SDT (Vergleich mit **nicht erfindungsgemäßem Beispiel 2.4**) deutlich. Ein günstiges Verstärkungsverhalten (σ₂₀₀/σ₂₅) ist ein Hinweis auf eine gute Kieselsäuredispersion. Dies sind Hinweise auf eine günstige Naßrutschfestigkeit/Rollwiderstand-Relation sowie auf einen hohen Abriebwiderstand von Laufflächenmischungen.

**Tabelle 2.7: Dynamische Beanspruchung im Goodrich Flexometer**

| **Compound Nr.** | **2.1** | **2.2** | **2.3** | **2.4** | **2.5** | **2.6** | **2.7*** | **2.8*** | **2.9*** |
|---|---|---|---|---|---|---|---|---|---|
| Temperaturerhöhung [°C] | 16,4 | 14,1 | 13,5 | 13,5 | 13,0 | 14,5 | 14,3 | 14,1 | 14,2 |
| Bleibende Verformung [%] | 4,0 | 2,0 | 2,4 | 2,4 | 2,0 | 2,8 | 2,4 | 2,4 | 2,4 |

Bei dynamischer Beanspruchung im Goodrich-Flexometer (DIN 53533) weisen die **erfindungsgemäßen Beispiele 2.7*, 2.8* und 2.9*** eine Temperaturerhöhung sowie eine bleibende Verformung auf, die vergleichbar mit den Werten der **Vergleichsbeispiele 2.1 - 2.6** ist.

**Tabelle 2.8: Dynamische Eigenschaften / Eplexor-Test**

| **Compound Nr.** | **2.1** | **2.2** | **2.3** | **2.4** | **2.5** | **2.6** | **2.7*** | **2.8*** | **2.9*** |
|---|---|---|---|---|---|---|---|---|---|
| E' (0°C) / 10 Hz [MPa] | 40,86 | 32,54 | 36,28 | 33,49 | 32,09 | 32,02 | 44,49 | 22,23 | 29,75 |
| E"(0°C) / 10 Hz [MPa] | 18,99 | 16,36 | 17,77 | 17,04 | 16,26 | 15,94 | 23,00 | 10,45 | 15,05 |
| tan δ (0°C) / 10 Hz | 0,465 | 0,502 | 0,489 | 0,509 | 0,507 | 0,498 | 0,517 | 0,470 | 0,506 |
| E' (60°C) / 10 Hz [MPa] | 8,78 | 8,00 | 9,12 | 8,23 | 8,37 | 8,19 | 6,74 | 7,08 | 6,62 |
| E"(60°C) / 10 Hz [MPa] | 1,04 | 0,74 | 0,86 | 0,75 | 0,76 | 0,67 | 0,61 | 0,55 | 0,55 |
| tan δ (60°C) / 10 Hz | 0,118 | 0,093 | 0,094 | 0,092 | 0,091 | 0,082 | 0,091 | 0,078 | 0,083 |
| tan δ (0°C) - tan (60°C) | 0,347 | 0,409 | 0,395 | 0,417 | 0,416 | 0,416 | 0,426 | 0,392 | 0,423 |

Bei dynamischer Beanspruchung weisen die **erfindungsgemäßen Beispiele 2.7*- 2.9*** bei 0°C und 60°C tan δ-Werte auf, die vergleichbar mit denen der **Vergleichsbeispiele 2.1 -2-6** sind. Ein niedriger tan δ-Wer bei 60°C ist ein Hinweis auf niedrigen Rollwiderstand und eine hohe Differenz der tan δ-Werte bei 60°C und 0°C ist ein Hinweis auf eine gute Naßrutschfestigkeits/Rollwiderstands-Relation.

Die Beispiele zeigen, dass in Kautschukmischungen basierend auf Lösungs-SBR und Polybutadien, die Kieselsäure und ein polysulfidisches Alkoxysilan enthalten und die ferner mit Zinkdithiophosphat (Rhenocure® ZDT) bzw. mit Polythiophosphoryldisulfiden (Rhenocure® SDT) anstelle von Diphenylguanidin aktiviert werden, hydroxylmodifizierte Mikrogele einen positiven Einfluss auf die Verarbeitungssicherheit der Kautschukmischungen (lange Anvulkanisationszeiten) ohne negativen Einflüsse auf die Vulkanisationsgeschwindigkeit und die Vernetzungsdichte haben. Ferner werden durch die Kombination der hydroxylgruppenhaltigen Mikrogele mit den polysulfidischen Alkoxysilanen, dem hellen Füllstoff und der Polythiophosphorverbindung die Vulkanisateigenschaften verbessert. Dies wird besonders deutlich am Verstärkungsfaktor (σ₂₀₀/σ₂₅), am Materialwiderstand gegen Bruch (σ₂₀₀/σ₂₅*Bruchdehnung /Zugfestigkeit) sowie am DIN-Abriebwiderstand.

## Patentansprüche

**1.** Vulkanisierbare Kautschukmischungen enthaltend
a) mindestens einen doppelbindungshaltigen Kautschuk,
b) mindestens ein hydroxylgruppenhaltiges Mikrogel,
c) mindestens einen hellen Füllstoff,
d) mindestens ein polysulfidhaltiges Alkoxysilan und
e) mindestens eine Polythiophosphorverbindung.

**2.** Vulkanisierbare Kautschukmischungen nach Anspruch 1, wobei mindestens ein doppelbindungshaltiger Kautschuk a) ausgewählt aus der Gruppe bestehend aus NR (Naturkautschuk), EPDM (Ethylen-Propylen-Dien Kautschuk), SBR (Vinylaromat/DienKautschuk), BR (Polybutadienkautschuk), IR (Polyisopren), SIBR (Styrol/Isopren/Butadien-Kautschuk), BIR (Butadien/Isopren-Kautschuk), IIR (Butylkautschuk, d.h. Isobuten/Isopren-Kautschuk), XIIR (Halobutylkautschuk, insbesondere Chlor- oder Brombutylkautschuk), NBR (Nitrilkautschuk), XNBR (carboxylierter Butadien/Acrylnitril-Kautschuk), SNBR (Styrol/ Butadien/Acrylnitril-Kautschuk), XSBR (carboxylierter Styrol/Butadien-Kautschuk), CR (Polychloropren) und ENR (epoxydierter Naturkautschuk) eingesetzt wird.

**3.** Vulkanisierbare Kautschukmischungen nach Anspruch 1 oder 2, wobei mindestens ein hydroxylgruppenhaltiges Mikrogel b) mit Wiederholungseinheiten mindestens eines hydroxylgruppenhaltigen Monomers (D) und mindestens eines vernetzenden Monomers (C) und mindestens eines konjugierten Diens (A) und/oder mindestens eines vinylaromatischen Monomers (B) eingesetzt wird.

**4.** Vulkanisierbare Kautschukmischungen nach einem der Ansprüche 1 bis 3, wobei als heller Füllstoff c) Kieselsäure (SiO₂), bevorzugt pyrogene Kieselsäure oder Fällungskieselsäure, oder Aluminiumoxid (Al₂0₃) oder Gemische davon eingesetzt werden.

**5.** Vulkanisierbare Kautschukmischungen nach einem der Ansprüche 1 bis 4, wobei mindestens ein polysulfidhaltiges Alkoxysilan d) der allgemeinen Formeln (I) oder (II) eingesetzt wird, 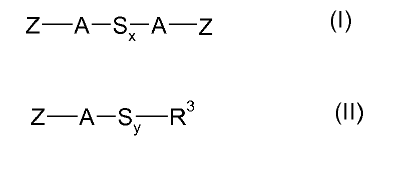 worin
x eine ganze Zahl von 2 bis 8 darstellt,
y eine ganze Zahl von 1 bis 8 darstellt,
A gleich oder verschieden sind und eine zweiwertige Kohlenwasserstoffgruppe darstellen,
Z gleich oder verschieden sind und eine der nachfolgend angegebenen Formeln besitzen 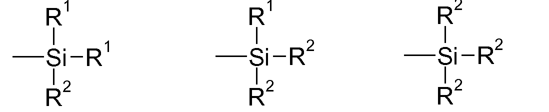 worin
R¹ gleich oder verschieden, substituiert oder unsubstituiert sein können und C₁-C₁₈ Alkyl, C₅-C₁₈ Cycloalkyl oder C₆-C₁₈ Aryl bedeuten und
R² gleich oder verschieden, substituiert oder unsubstituiert sein können und C₁-C₁₈ Alkoxy, C₅-C₁₈ Cycloalkoxy oder C₆-C₁₈ Aryloxy bedeuten, und
R³ Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest mit nachfolgenden Strukturen bedeutet 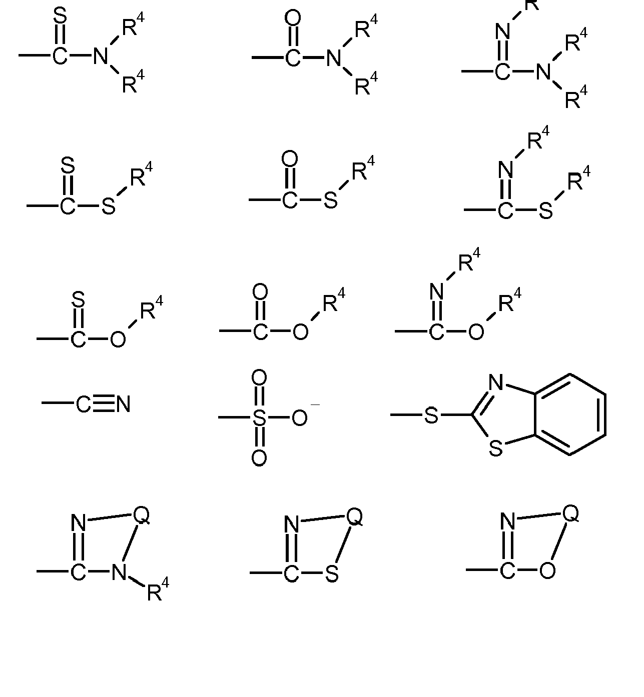
worin R⁴ für einen aliphatischen, heteroaliphatischen, cycloaliphatischen, aromatischen oder heteroaromatischen Rest mit 1 bis 20, bevorzugt 1 bis 10 Kohlenstoffatomen und mit optional 1 bis 3 Heteroatomen, vorzugsweise Sauerstoff, Stickstoff oder Schwefel steht.

**6.** Vulkanisierbare Kautschukmischungen nach einem der Ansprüche 1 bis 5, wobei mindestens eine Polythiophosphorverbindung e) der allgemeinen Formel (III) oder (IV) eingesetzt wird, 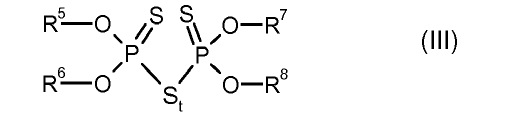 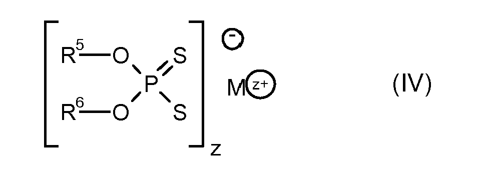 worin
R⁵, R⁶, R⁷ und R⁸ gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
t für eine ganze Zahl von 1 bis 8, bevorzugt 3 bis 6 steht,
z für eine ganze Zahl von 1 bis 3, bevorzugt 1 bis 2 steht, und
M^{z+} ein Metallkation mit der Ladung z+ bedeutet, wobei z+ für 1 bis 3, bevorzugt 1 und 2 steht, oder ein Kation der Formel N(R⁹)₄⁺bedeutet, worin R⁹ gleich oder verschieden sind und Wasserstoff und/oder die Bedeutungen R⁵ besitzen können.

**7.** Vulkanisierbare Kautschukmischungen nach Anspruch 6, wobei als Komponente e) mindestens eine Verbindung der Formel (IVa) eingesetzt wird, 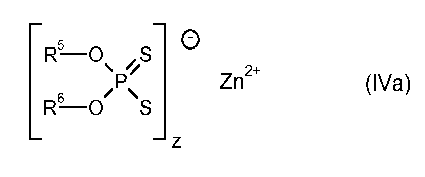 worin
z gleich 2 ist
R⁵ und R⁶ gleich oder verschieden sind und Wasserstoff oder eine geradkettige oder
verzweigte, substituierte oder unsubstituierte Alkylgruppe oder Cycloalkylgruppe mit 1 bis 12 Kohlenstoffatomen, bevorzugt eine C₂-C₁₂ Alkylgruppe oder eine C₅-C₁₂ Cycloalkylgruppe und insbesondere Ethyl, Propyl, Isopropyl, Butyl, Isobutyl, Cyclohexyl, Ehtylhexyl oder Dodecyl bedeuten.

**8.** Vulkanisierbare Kautschukmischungen nach Anspruch 1 enthaltend
a) mindestens einen doppelbindungshaltigen Kautschuk,
b) mindestens ein hydroxylgruppenhaltiges Mikrogel,
c) mindestens eine Kieselsäure als hellen Füllstoff,
d) mindestens ein polysulfidhaltiges Alkoxysilan der allgemeinen Formel (I) oder (II) 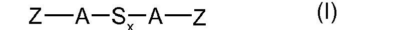 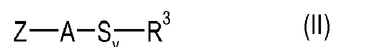
worin
x eine ganze Zahl von 2 bis 8 darstellt,
y eine ganze Zahl von 1 bis 8 darstellt,
A gleich oder verschieden und eine zweiwertige Kohlenwasserstoffgruppe bedeuten,
Z gleich oder verschieden sind und eine der nachfolgend angegebenen Formeln besitzen, 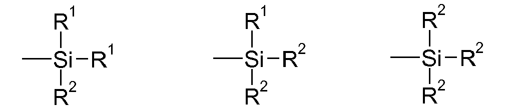 worin
R¹ gleich oder verschieden, substituiert oder unsubstituiert sein können und eine C₁-C₁₈ Alkyl, C₅-C₁₈ Cycloalkyl oder C₆-C₁₈ Aryl darstellen und
R² gleich oder verschieden, substituiert oder unsubstituiert sein können und C₁-C₁₈ Alkoxy, C₅-C₁₈ Cycloalkoxy oder C₆-C₁₈ Aryloxy darstellen, und
R³ Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest mit nachfolgenden Strukturen bedeutet, 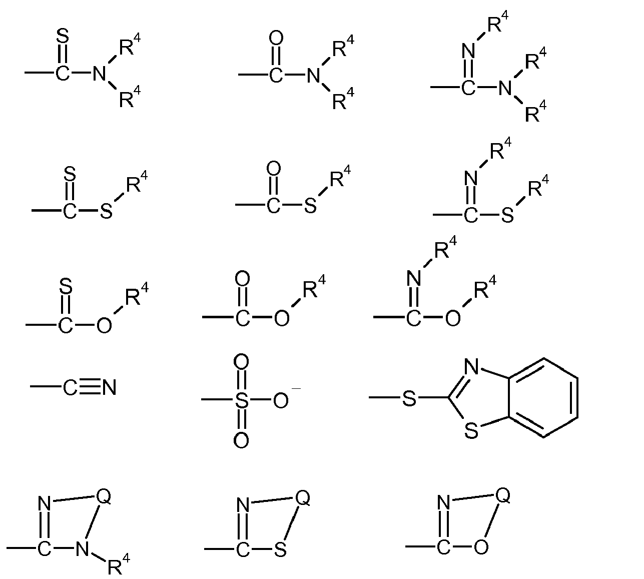 worin R⁴ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht,
und
e) mindestens eine Polythiophosphorverbindung der allgemeinen Formel (III) oder (IV) 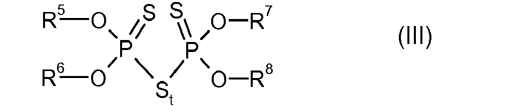 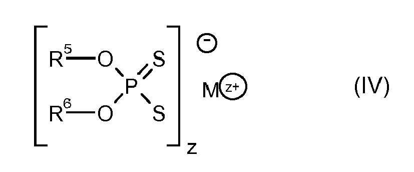
worin
R⁵, R⁶, R⁷ und R⁸ gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
t für eine ganze Zahl von 1 bis 8, bevorzugt 3 bis 6 steht,
z für eine ganze Zahl von 1 bis 3, bevorzugt 1 bis 2 steht, und
M^{z+} ein Metallkation mit der Ladung z+ bedeutet, mit z+ gleich 1 bis 3, bevorzugt 1 oder 2, und M^{z+} bevorzugt für Li⁺, Na⁺, K⁺, Rb⁺, Cs⁺, Be²⁺, Mg²⁺, Ca²⁺, Sr²⁺, Ba²⁺, Al³⁺ Nd²⁺, Zn²⁺, Cd²⁺, Ni²⁺ oder Cu²⁺ steht
Vulkanisierbare Kautschukmischung nach Anspruch 1 enthaltend
a) mindestens einen Kautschuk ausgewählt aus der Gruppe bestehend aus NR (Naturkautschuk), SBR (Vinylaromat/Dien-Kautschuke), BR (Polybutadienkautschuk), IR (Polyisopren), IBR (Isopren/Butadien-Kautschuk), IIR (Isobuten/Isopren-Kautschuk), BIR (Butadien/Isopren-Kautschuk), SIBR (Styrol/Isopren-Kautschuk) und Mischungen daraus,
b) mindestens ein hydroxygruppenhaltiges Mikrogel ausgewählt aus der Gruppe bestehend aus Mikrogelen auf Basis der Monomere Butadien, Trimethylolpropantrimethacrylat und Hydroxyethylmethacrylat, Mikrogelen auf Basis der Monomere Butadien, Styrol, Trimethylolpropantrimethacrylat und Hydroxyethylmethacrylat und Mikrogelen auf Basis der Monomere Styrol, Trimethylolpropantrimethacrylat und Hydroxyethylmethacrylat, wobei diese Mikrogele besonders bevorzugt (i) eine Glastemperatur im Bereich von -78 °C bis 150 °C, insbesondere von -78 °C bis 125 °C, (ii) einen Quellungsindex von weniger als 30, insbesondere weniger als 25, ganz besonders bevorzugt weniger als 20 und (iii) einen Gehalt einpolymerisierter hydroxylhaltiger Monomerer von größer als 0,1 Gew.-% mit Hydroxylzahlen größer als 0,5 aufweisen,
c) Kieselsäure als heller Füllstoff,
d) mindestens einem Bis(triethoxysilylpropyl)polysulfan der folgenden Strukturformel (V) mit n= 2 oder 4 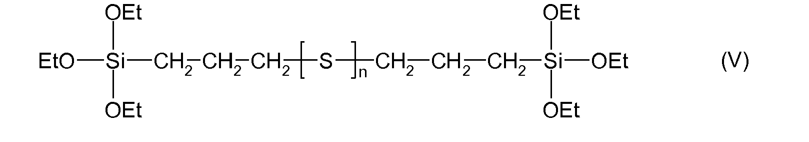
e) entweder 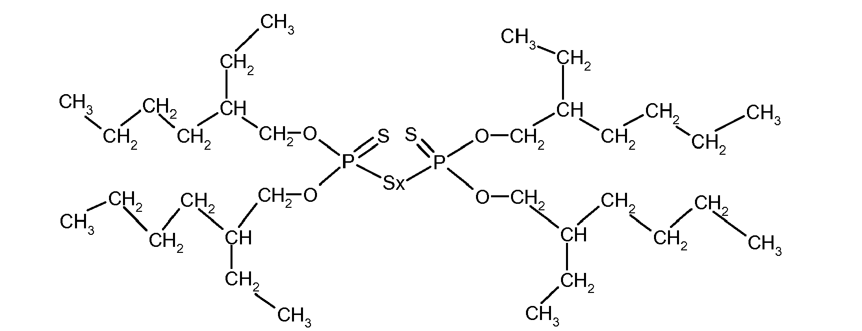 mit x = 2 bis 4 oder 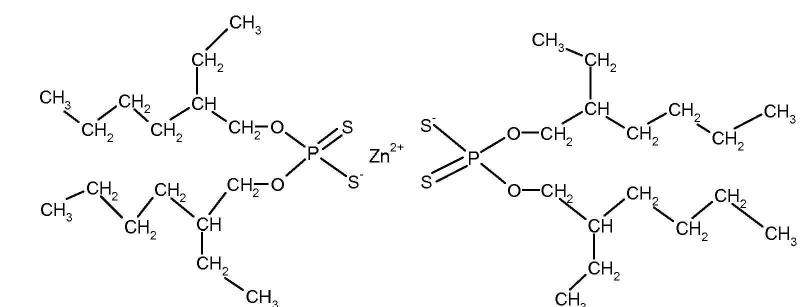 und f) Schwefel oder Schwefelspender.

**10.** Vulkanisierbare Kautschukmischung nach einem der Ansprüche 1 bis 9 enthaltend
a) mindestens einen Kautschuk,
b) 1 bis 100 Gew.-Teile, vorzugsweise 2,5 bis 50 Gew.-Teile, besonders bevorzugt 3 bis 30 Gew.-Teile mindestens eines hydroxylgruppenhaltigen Mikrogels,
c) 20 bis 200 Gew.-Teile, vorzugsweise 30 bis 150 Gew.-Teile, besonders bevorzugt 50 bis 130 Gew.-Teile mindestens eines hellen Füllstoffs,
d) 0,2 bis 12 Gew.-Teile, vorzugsweise 1 bis 10 Gew.-Teile, besonders bevorzugt 2 bis 9 Gew.-Teilen mindestens eines polysulfidhaltigen Alkoxysilans,
e) 1 bis 5 Gew.-Teile, vorzugsweise 1,5 bis 4,0 Gew.-Teile, besonders bevorzugt 1,8 bis 3,5 Gew.-Teile mindestens einer Polythiophosphorverbindung und
f) optional 0,1 bis 50 Gew.-Teile, vorzugsweise 1,0 bis 40 Gew.-Teile, besonders bevorzugt 1,5 bis 30 Gew.-Teile eines oder mehrerer weiterer Kautschukadditive.
wobei alle vorgenannten Gew.-Teil Angaben für die Komponenten b) bis f) jeweils auf 100 Gewichtsteile der Kautschukkomponente(n) a) bezogen sind.

**11.** Vulkanisierbare Kautschukmischungen nach einem der Ansprüche 1 bis 10 zusätzlich enthaltend ein oder mehrere Komponenten f) in Form von Kautschukadditiven ungleich den Komponenten b) - e), bevorzugt ausgewählt aus der Gruppe bestehend aus Alterungsschutzmitteln, Reversionsschutzmitteln, Lichtschutzmitteln, Ozonschutzmitteln, Verarbeitungshilfsmitteln, Weichmachern, Mineralölen, Tackifiern, Treibmitteln, Farbstoffen, Pigmenten, Wachsen, Harzen, Streckmitteln, organische Säuren, Vulkanisationsverzögerern, Metalloxiden, sowie Füllstoffaktivatoren,.

**12.** Verfahren zur Herstellung von vulkanisierbaren Kautschukmischungen nach einem der Ansprüche 1 bis 11, **dadurch gekennzeichnet, dass** man die Komponenten a) bis e) in einer oder mehreren Stufen miteinander mischt, bevorzugt entweder durch einen dreistufigen Mischprozess mit zwei Mischstufen in einem Innenmischer und einer abschließenden Mischstufe auf einer Walze, oder durch einen zweistufigen Mischprozess, bei dem die 1. Mischstufe in einem Innenmischer und die 2. Mischstufe auf einer Walze erfolgt, oder durch einen zweistufigen Mischprozess, bei dem beide Mischstufen in einem Innenmischer erfolgen, wobei die Mischung vor der Zugabe derjenigen Komponenten, die bei dreistufigem Mischprozess auf der Walze zugegeben werden, auf Temperaturen < 120°C, vorzugsweise <110°C abgekühlt wird.

**13.** Verfahren zur Herstellung von Vulkanisaten, **dadurch gekennzeichnet, dass** man vulkanisierbare Kautschukmischungen nach einem der Ansprüche 1 bis 11 einer Vernetzungsreaktion unterwirft, bevorzugt bei einer Temperatur im Bereich von 100 bis 250°C, insbesondere von 130 bis 180°C, unter einem Druck im Bereich von 1 bis 100 bar.

**14.** Verfahren nach Anspruch 13, **dadurch gekennzeichnet, dass** die Vernetzung im Rahmen eines Formgebungsprozesses stattfindet.

**15.** Vulkanisate erhältlich durch das Verfahren nach Anspruch 13 oder 14.

**16.** Verwendung von vulkanisierbaren Mischungen nach einem der Ansprüche 1 bis 11 zur Herstellung von Reifen und Reifenbauteilen, insbesondere Reifenlaufflächen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkemen und Schuhsohlen.
